# EUROPEAN PATENT APPLICATION

(11) **EP 4 815 434 A1**
(43) Date of publication of application: **30.09.2026**
(21) Application number: 23959510.1
(22) Date of filing: 24.11.2023
(51) Int. Cl.: H04N 7/18, G03B 15/00

(54) **IMAGING SYSTEM AND DISPLAY METHOD**

(71) Applicant: NIKON CORPORATION, Tokyo 140-8601 (JP)
(72) Inventor: OKADA, Takaya, Tokyo 108-6290 (JP); NEMOTO, Tomoaki, Tokyo 108-6290 (JP)
(74) Representative: Hoffmann Eitle
(86) International application number: PCT/JP2023/042273
(87) International publication number: WO 2025/109769

(57) **Abstract**

An imaging system includes a first optical system, a first imaging element that generates first picture data representing a first picture by capturing an image formed by the first optical system, a second optical system, a second imaging element that generates second picture data representing a second picture by capturing an image formed by the second optical system, a changing mechanism configured to change the direction or position of at least part of the second optical system or the second imaging element, and a control device including a processor. The first picture includes a first object and a second object. The control device outputs to a display device a display signal for displaying, in different display areas, a second picture of the first object and a second picture of the second object, each generated by controlling the changing mechanism based on the first picture data.

## Description

### FIELD

The present invention relates to an imaging system and a display method.

### BACKGROUND

Patent Literature 1 describes an imaging system including a wide-angle camera, a close-up camera that images part of the imaging range of the wide-angle camera, and a drive mirror that moves the imaging range of the close-up camera.

### CITATION LIST

### PATENT LITERATURE

Patent Literature 1: International Publication No. 2018/138349

### SUMMARY

An imaging system according to an embodiment of the present invention includes a first optical system, a first imaging element that generates first picture data representing a first picture by capturing an image formed by the first optical system, a second optical system, a second imaging element that generates second picture data representing a second picture by capturing an image formed by the second optical system, a changing device that changes at least one of the direction and position of at least one of at least part of the second optical system and the second imaging element, and a control device; the first picture includes a first object and a second object; and to a display device the control device outputs a display signal for displaying, in different display areas of the display device, the second picture of the first object generated by controlling the changing device to capture an image of the first object with the second imaging element, based on the first picture data, so that an image of the first object is formed on an imaging surface of the second imaging element via the second optical system, and the second picture of the second object generated by controlling the changing device to capture an image of the second object with the second imaging element, based on the first picture data, so that an image of the second object is formed on the imaging surface via the second optical system.

An imaging system according to another embodiment of the present invention includes a first optical system, a first imaging element that generates first picture data by capturing an image formed by the first optical system, a second optical system, a second imaging element that generates second picture data by capturing an image formed by the second optical system, and a control device; the first picture includes an object, a first reflective member, and a second reflective member; and to a display device the control device outputs a display signal for displaying, in different display areas of the display device, a second picture generated by controlling a changing device to capture an image of the object reflected in the first reflective member with the second imaging element, based on the first picture data, so that an image of the object reflected in the first reflective member is formed on an imaging surface via the second optical system, and a second picture generated by controlling the changing device to capture an image of the object reflected in the second reflective member with the second imaging element, based on the first picture data, so that an image of the object reflected in the second reflective member is formed on the imaging surface of the second imaging element.

An imaging system according to another embodiment of the present invention includes a first optical system, a first imaging element that generates first picture data by capturing an image formed by the first optical system, a second optical system, a second imaging element that generates second picture data by capturing an image formed by the second optical system, a changing device that changes at least one of the direction and position of at least one of at least part of the second optical system and the second imaging element, and a control device; the first picture includes a first object and a second object; and to a display device the control device outputs display signals for alternately displaying, in a display area of the display device, the second picture of the first object generated by controlling the changing device to capture an image of the first object with the second imaging element, based on the first picture data, so that an image of the first object is formed on the imaging surface via the second optical system, and the second picture of the second object generated by controlling the changing device to capture an image of the second object with the second imaging element, based on the first picture data, so that an image of the second object is formed on the imaging surface of the second imaging element.

A display method according to an embodiment of the present invention is a display method executed by an imaging system including a first optical system, a second optical system, a first imaging element, a second imaging element, and a changing device; the display method includes generating first picture data including a first object and a second object by capturing an image formed by the first optical system with the first imaging element; generating second picture data by capturing an image formed by the second optical system with the second imaging element; and outputting, to a display device, a display signal for displaying, in different display areas of the display device, the second picture of the first object generated by controlling the changing device to capture an image of the first object with the second imaging element, based on the first picture data, so that an image of the first object is formed on the imaging surface via the second optical system, and the second picture of the second object generated by controlling the changing device to capture an image of the second object with the second imaging element, based on the first picture data, so that an image of the second object is formed on the imaging surface of the second imaging element.

### BRIEF DESCRIPTION OF DRAWINGS

FIG. 1 schematically illustrates an imaging system according to a first embodiment.
FIG. 2 illustrates the general configuration of the imaging system according to the first embodiment.
FIG. 3 is a functional block diagram of a memory and a processor according to the first embodiment.
FIG. 4 illustrates an example of an object picture according to the first embodiment.
FIG. 5 is a flowchart showing the flow of a display method according to the first embodiment.
FIG. 6 is a timing chart for explaining the flow of the display method according to the first embodiment.
FIG. 7 is a timing chart for explaining the flow of the display method according to the first embodiment.
FIGs. 8(A) and 8(B) illustrate an example of object pictures according to a modified example of the first embodiment.
FIG. 9 is a flowchart showing the flow of a display method according to the modified example of the first embodiment.
FIG. 10 is a functional block diagram of the memory and the processor according to a modified example of the first embodiment.
FIGs. 11(A) and 11(B) illustrate an example of object pictures according to the modified example of the first embodiment.
FIG. 12 illustrates an example of an object picture according to a modified example of the first embodiment.
FIG. 13 is a flowchart showing the flow of a display method according to a modified example of the first embodiment.
FIG. 14 is a flowchart showing the flow of a display method according to a modified example of the first embodiment.
FIG. 15 illustrates the general configuration of an imaging system according to a second embodiment.
FIG. 16 is a functional block diagram of a memory and a processor according to the second embodiment.
FIG. 17 schematically illustrates an imaging system according to a third embodiment.
FIG. 18 is a functional block diagram of a memory and a processor according to the third embodiment.
FIG. 19 is a flowchart showing the flow of a display method according to the third embodiment.
FIG. 20 illustrates the general configuration of an imaging system according to a fourth embodiment.

### DESCRIPTION OF EMBODIMENTS

Embodiments of the present invention will now be described with reference to the drawings.

### [First embodiment]

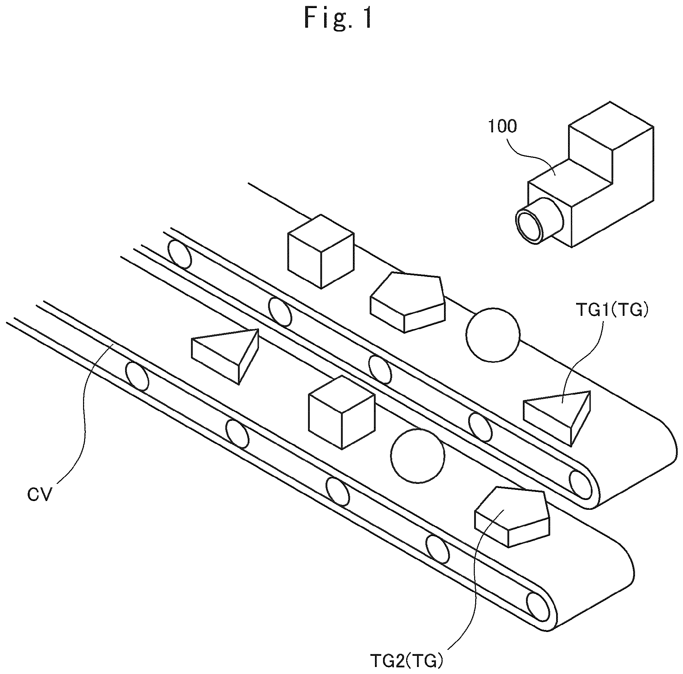

FIG. 1 schematically illustrates an imaging system 100 according to a first embodiment of the present invention. The imaging system 100 images a first object TG1 and a second object TG2 among multiple objects TG to generate wide-angle picture data representing a wide-angle picture including the first object TG1 and the second object TG2. Further, the imaging system 100 images the first object TG1 to generate magnified picture data representing a magnified picture including the first object TG1, and images the second object TG2 to generate magnified picture data representing a magnified picture including the second object TG2. The wide-angle picture and the wide-angle picture data are an example of the first picture and the first picture data, respectively. The magnified picture and the magnified picture data are an example of the second picture and the second picture data, respectively.

The objects TG may include multiple types of objects having different appearance characteristics, such as size, shape, and color. The objects TG may move with respect to the imaging system 100. In the example shown in FIG. 1, the objects TG move with respect to the imaging system 100 by being conveyed by a conveyor CV.

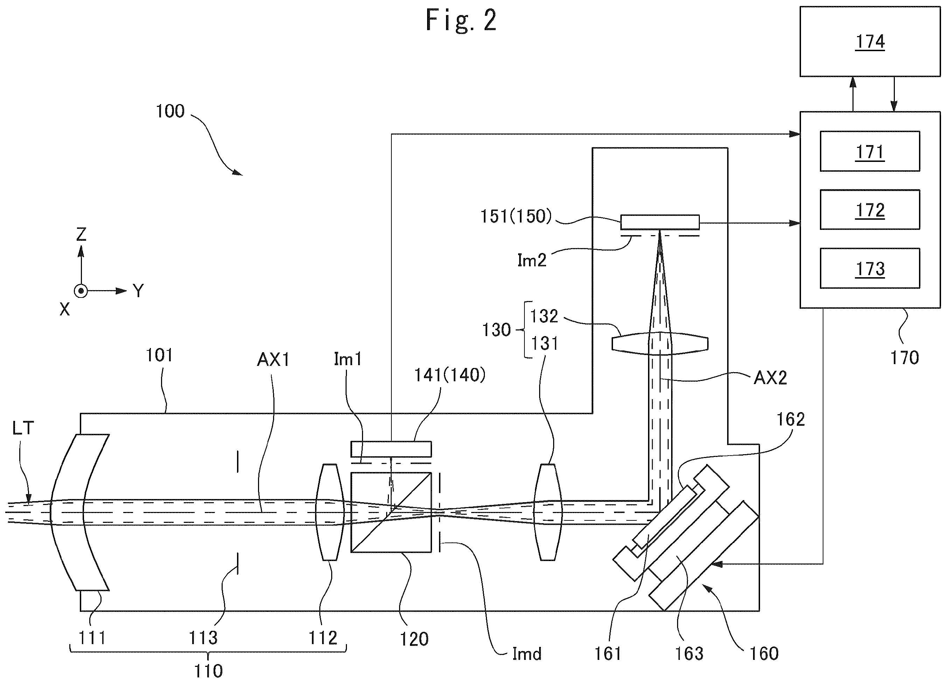

FIG. 2 illustrates the general configuration of the imaging system 100. The imaging system 100 includes an imaging optical system 110, a light-splitting member 120, a magnification optical system 130, a first imaging device 140, a second imaging device 150, a changing device 160, and a control device 170. The imaging optical system 110, the light-splitting member 120, the magnification optical system 130, the first imaging element 140, the second imaging element 150, and the changing device 160 are housed and held in a housing 101. The imaging system 100 is connected to a display device 174. The imaging optical system is an example of the first optical system; the magnification optical system is an example of the second optical system.

In the present embodiment, the optical axis of the imaging optical system 110 and a first magnification optical system 131 of the magnification optical system 130 is referred to as a first optical axis AX1. The optical axis of a second magnification optical system 132 of the magnification optical system 130 is referred to as a second optical axis AX2. The second optical axis AX2 may intersect the first optical axis AX1. The second optical axis AX2 may be perpendicular to the first optical axis AX1. The direction along the first optical axis AX1 is referred to as a Y-direction. The direction along the second optical axis AX2 is referred to as a Z-direction. The direction perpendicular to the Y- and Z-directions is referred to as an X-direction. In other words, the X-, Y-, and Z-directions are perpendicular to each other. For example, as shown in FIG. 2, the Z-direction may be a vertical direction, and the X- and Y-directions may be horizontal directions.

The imaging optical system 110 includes a front lens 111, a rear lens 112, and an aperture stop 113. The imaging optical system 110 may be telecentric on the side of the light-splitting member 120 (the side of an intermediate image plane Imd described below). The front lens 111 is disposed farther from the light-splitting member 120 than the aperture stop 113. The rear lens 112 is disposed closer to the light-splitting member 120 than the aperture stop 113. In FIG. 2, the front lens 111 and the rear lens 112 are each shown schematically as a single lens. The front lens 111 and the rear lens 112 may each be composed of a single lens or multiple lenses. The front lens 111 and the rear lens 112 may each include an optical member other than a lens in addition to one or more lenses. The front lens 111 may include a focusing lens movable along the optical axis during focusing.

The imaging optical system 110 may be exchangeable. The exchangeable imaging optical system 110 may be, for example, at least one of a single-focus lens and a fisheye lens. In other words, a single-focus lens or a fisheye lens may be used as the imaging optical system 110. Multiple types of single-focus lenses having different focal lengths may be used as the exchangeable imaging optical system 110.

The imaging optical system 110 may be unexchangeable. In this case also, the imaging optical system 110 may be at least one of a single-focus lens and a fisheye lens. The maximum angle of view of the imaging optical system 110 (i.e., the maximum angle of view on the object side of an image captured by the first imaging device 140) may be 170° or more. The maximum angle of view of the imaging optical system 110 may be less than 170°. For example, the maximum angle of view of the imaging optical system 110 may be 160°.

The light-splitting member 120 is disposed between the imaging optical system 110 and the magnification optical system 130. The light-splitting member 120 splits light LT that has passed through the imaging optical system 110 to guide one portion of light to the first imaging device 140 and the other portion of light to the magnification optical system 130. For example, the light-splitting member 120 may be a semi-transparent mirror and perform amplitude splitting on light LT that has passed through the imaging optical system 110. More specifically, the light-splitting member 120 may reflect some of light LT that has passed through the imaging optical system 110 toward the first imaging device 140 in the +Z-direction, and transmit the other portion of light. The semi-transparent mirror may be of a prism type or a flat type. The ratio of the transmittance to the reflectance of the semi-transparent mirror may be 1:1 or another ratio. For example, this ratio may be 2:1.

The light-splitting member 120 may be a dichroic mirror and perform wavelength splitting on light LT that has passed through the imaging optical system 110. For example, the light-splitting member 120 may reflect light in the near-infrared wavelength range of light LT that has passed through the imaging optical system 110 toward the first imaging device 140 in the +Z-direction, and transmit light in other wavelength ranges (visible light). The light-splitting member 120 may transmit light in the near-infrared wavelength range of light LT that has passed through the imaging optical system 110, and reflect light in other wavelength ranges (visible light) toward the first imaging device 140 in the +Z-direction.

The light-splitting member 120 may be a polarizing beam splitter and perform polarization splitting on light LT that has passed through the imaging optical system 110. The light-splitting member 120 may be disposed midway through the imaging optical system 110. In this case, the light-splitting member 120 splits light LT that has passed through part of the imaging optical system 110. For example, the rear lens 112 may be disposed between the light-splitting member 112 and a first image plane Im1 and between the light-splitting member 120 and an intermediate image plane Imd.

Of the light LT that has passed through at least part of the imaging optical system 110, light reflected by the light-splitting member 120 forms a first image Im1. In other words, a first image Im1 is formed by the one portion of light split by the light-splitting member 120. Further, of the light LT that has passed through the imaging optical system 110, light transmitted through the light-splitting member 120 forms an intermediate image Imd. In other words, an intermediate image Imd is formed by the other portion of light split by the light-splitting member 120. An intermediate image Imd is also referred to as a third image. The position where the intermediate image Imd is formed may be conjugate to the position where the first image Im1 is formed. In short, the intermediate image Imd may be an image conjugate to the first image Im1. A first image Im1 formed by the one portion of light split by the light-splitting member 120 can also be referred to as an intermediate image. Since the light LT that has passed through at least part of the imaging optical system 110 is split by the light-splitting member 120, and beams of the split light form a first image Im1 and an intermediate image Imd, respectively, it can also be said that the light-splitting member 120 contributes to imaging. Thus the light-splitting member 120 may be part of the imaging optical system 110.

The magnification optical system 130 magnifies and re-forms part of the intermediate image Imd formed by the light LT that has passed through the imaging optical system 110, thereby forming a second image Im2. In other words, a second image Im2 is formed via the magnification optical system 130 by the other portion of light split by the light-splitting member 120. As described above, the position where the intermediate image Imd is formed may be conjugate to the position where the first image Im1 is formed. Magnifying and re-forming part of the intermediate image Imd by the magnification optical system 130 produces an effect equivalent to re-forming part of the first image Im1 (a portion at the same relative position as the intermediate image Imd). In other words, the magnification optical system 130 magnifies and reforms part of the intermediate image Imd corresponding to part of the first image Im1.

The magnification optical system 130 may be telecentric on the side of the intermediate image Imd (light-splitting member 120). This prevents the chief ray from diverging near the intermediate image Imd, and allows for reducing the diameter of the magnification optical system 130. This allows for downsizing the imaging system 100, reducing the manufacturing cost, and further reducing variations in the incident angle of light incident on the light-splitting member 120 (light-splitting plane). Although both the imaging optical system 110 and the magnification optical system 130 are telecentric on the side of the intermediate image Imd (light-splitting member 120) in the example shown in FIG. 2, the present invention is not limited to such an example. For example, only one of the imaging optical system 110 and the magnification optical system 130 may be telecentric on the side of the intermediate image Imd (light-splitting member 120).

The magnification optical system 130 includes a first magnification optical system 131 and a second magnification optical system 132. On the first magnification optical system 131 is incident light transmitted through the light-splitting member 120. In other words, the other portion of light split by the light-splitting member 120 is incident on the first magnification optical system 131. On the second magnification optical system 132 is incident light from the first magnification optical system 131. In FIG. 2, the first magnification optical system 131 and the second magnification optical system 132 are each shown schematically as a single lens. The first magnification optical system 131 and the second magnification optical system 132 may each be composed of one or more lenses. The first magnification optical system 131 and the second magnification optical system 132 may each include an optical member other than a lens in addition to one or more lenses.

The optical members constituting the first magnification optical system 131 and the second magnification optical system 132 may be housed in a lens barrel. In this case, the inner circumferential surface of the lens barrel may be subjected to anti-reflection treatment. This prevents the occurrence of flare caused by light reflection on the inner surface of the lens barrel. The anti-reflection treatment is achieved, for example, by disposing flocked paper on the inner circumferential surface. The first magnification optical system 131 and the second magnification optical system 132 may further include one or more annular masks. This results in the mask blocking light reflected by the inner surface of the lens barrel, thereby preventing the occurrence of flare caused by light reflection on the inner surface of the lens barrel. In this case, the inner diameter of the lens barrel may be greater than the outer diameters of the lenses. This prevents, even if the light reflected by the inner surface of the lens barrel leaks from outside the mask because of the tolerance of the outer diameter of the mask, such light from being incident on the lenses, and prevents the occurrence of flare.

The optical axis of the second magnification optical system 132 (second optical axis AX2) may be perpendicular to the optical axis of the first magnification optical system 131 (first optical axis AX1). The optical axis of the second magnification optical system 132 may intersect the optical axis of the first magnification optical system 131 at an angle other than 90 degrees. For example, the optical axis of the second magnification optical system 132 may intersect the optical axis of the first magnification optical system 131 within an angular range of 90 degrees ±5 degrees. At the intersection position where the optical axes of the first magnification optical system 131 and the second magnification optical system 132 intersect or in its vicinity is disposed a reflective surface 162 of a first reflective member 161 included in the changing device 160. The intersection position where the optical axes of the first magnification optical system 131 and the second magnification optical system 132 intersect is also referred to as the position of the point of intersection of the optical axes of the first magnification optical system 131 and the second magnification optical system 132. The vicinity of the intersection position may be, for example, those positions different from the intersection position where the reflective surface 162 of the first reflective member 161 can reflect light from the first magnification optical system 131 toward the second magnification optical system 132. The second magnification optical system 132 forms a second image Im2 by light from the first magnification optical system 131 reflected by the reflective surface 162 of the first reflective member 161. In other words, a second image Im2 is formed by the first magnification optical system 131 and the second magnification optical system 132. It can also be said that the magnification optical system 130 includes the first reflective member 161 in addition to the first magnification optical system 131 and the second magnification optical system 132.

The second magnification optical system 132 may be exchangeable. The exchangeable second magnification optical system 132 may be, for example, an optical system with a fixed magnification or a variable magnification optical system (zoom lens). In other words, an optical system with a fixed magnification or a variable magnification optical system (zoom lens) may be used as the second magnification optical system 132. Multiple types of optical systems with different magnifications may be used as the exchangeable second magnification optical system 132.

The second magnification optical system 132 may be unexchangeable. In this case also, the second magnification optical system 132 may be an optical system with a fixed magnification or a variable magnification optical system. Since the second magnification optical system 132 is an optical system with a fixed magnification or a variable magnification optical system, it can also be said that the magnification optical system 130 is an optical system with a fixed magnification or a variable magnification optical system. The magnification optical system 130 may be configured to re-form a second image Im2 by reducing part of the intermediate image Imd or with the same size as part of the intermediate image Imd. If the magnification optical system 130 re-forms a second image Im2 without magnifying part of the intermediate image, the second imaging device 150 may magnify the second image Im2 to generate magnified picture data (digital zoom).

The first imaging device 140 includes a first imaging element 141 that captures the first image Im1. The first imaging element 141 may be a complementary metal oxide semiconductor (CMOS) image sensor. The first imaging element 141 may be an infrared image sensor capable of capturing an image of infrared rays. In this case, the first imaging element 141 may be a near-infrared image sensor capable of capturing an image of near-infrared rays or a mid-infrared image sensor capable of capturing an image of mid-infrared rays. The first imaging element 141 may be an event-based vision sensor. For example, when the light reflected by the light-splitting member 120 is visible light, the first imaging element 141 may be a CMOS image sensor or an event-based vision sensor. When the light reflected by the light-splitting member 120 includes light in the near-infrared wavelength range, the first imaging element 141 may be a near-infrared image sensor. When the light reflected by the light-splitting member 120 includes light in the mid-infrared wavelength range, the first imaging element 141 may be a mid-infrared image sensor.

The first imaging element 141 is disposed at the position of the image plane where the first image Im1 is formed or its vicinity. The vicinity of the position of the image plane where the first image Im1 is formed is, for example, the vicinity of the range in which the first imaging element 141 can capture the first image Im1 so that an object TG can be identified in a picture of the first image Im1.

In the imaging region of the first imaging element 141, multiple pixels are arranged two-dimensionally. The multiple pixels are arranged at a predetermined array pitch in the X- and Y-directions. For example, 1,000 or more pixels may be arranged in each of the X- and Y-directions. The pixels of the first imaging element 141 perform photoelectric conversion on light reflected by the light-splitting member 120 and incident on the first imaging element 141. The first imaging device 140 outputs picture data of the first image Im1 generated based on photoelectric conversion at each pixel of the first imaging element 141 to the control device 170.

The second imaging device 150 includes a second imaging element 151 that captures the second image Im2. The second imaging element 151 may be a CMOS image sensor. The second imaging element 151 may be an infrared image sensor. In this case, the second imaging element 151 may be a near-infrared image sensor or a mid-infrared image sensor. The second imaging element 151 may be an event-based vision sensor. For example, when the light transmitted through the light-splitting member 120 is visible light, the second imaging element 151 may be a CMOS image sensor or an event-based vision sensor. When the light transmitted through the light-splitting member 120 includes light in the near-infrared wavelength range, the second imaging element 151 may be a near-infrared image sensor.

When the light reflected by the light-splitting member 120 and the light transmitted therethrough are both visible light, the first imaging element 141 may be an event-based vision sensor and the second imaging element 151 may be a CMOS image sensor. When the light reflected by the light-splitting member 120 is visible light and the light transmitted through the light-splitting member 120 includes light in the near-infrared wavelength range, the first imaging element 141 may be an event-based vision sensor and the second imaging element 151 may be a near-infrared image sensor. When the light reflected by the light-splitting member 120 and the light transmitted therethrough both include light in the near-infrared wavelength range, the first imaging element 141 and the second imaging element 151 may be near-infrared image sensors. When the light reflected by the light-splitting member 120 and the light transmitted therethrough both include light in the mid-infrared wavelength range, the first imaging element 141 and the second imaging element 151 may be mid-infrared image sensors.

The second imaging element 151 is disposed at the position of the image plane where the second image Im2 is formed or its vicinity. The vicinity of the position of the image plane where the second image Im2 is formed is, for example, the vicinity of the range in which the second imaging element 151 can capture the second image Im2 so that an object TG can be identified in a picture of the second image Im2.

In the imaging region of the second imaging element 151, multiple pixels are arranged two-dimensionally. The multiple pixels are arranged at a predetermined array pitch in the X- and Y-directions. For example, 1,000 or more pixels may be arranged in each of the X- and Y-directions. The pixels of the second imaging element 151 perform photoelectric conversion on light transmitted through the light-splitting member 120, passing through the magnification optical system 130, and incident on the second imaging element 151. The second imaging device 150 outputs picture data of the second image Im2 generated based on photoelectric conversion at each pixel of the second imaging element 151 to the control device 170.

The array pitch of the pixels of the second imaging element 151 may be less than that of the pixels of the first imaging element 141. More specifically, the effective region (region where the pixels are arranged) of the second imaging element 151 may have more pixels per unit area (a higher density) than the effective region (region where the pixels are arranged) of the first imaging element 141. In short, the second imaging element 151 may be an imaging element with a higher resolution than the first imaging element 141. The array pitch of the pixels of the second imaging element 151 may be equal to or less than that of the pixels of the first imaging element 141. For example, the area of the effective region of the second imaging element 151 may be less than the area of the effective region of the first imaging element 141. The area of the effective region of the second imaging element 151 may be equal to or greater than the area of the effective region of the first imaging element 141.

The changing device 160 includes a reflective member 161 having a reflective surface 162 as well as a driver 163. As described above, the reflective surface 162 of the reflective member 161 may be disposed at the intersection position where the optical axis of the first magnification optical system 131 (first optical axis AX1) intersects the optical axis of the second magnification optical system 132 (second optical axis AX2) or in its vicinity. The reflective surface 162 of the reflective member 161 may be disposed at the pupil position or the pupil conjugate position of the optical system consisting of the imaging optical system 110 and the first magnification optical system 131. This allows for reducing the area of the reflective surface 162 of the reflective member 161. The reflective surface 162 of the reflective member 161 reflects at least part of light transmitted through the light-splitting member 120 and the first magnification optical system 131 toward the second magnification optical system 132. In other words, the reflective surface 162 of the reflective member 161 reflects at least part of the other portion of light split by the light-splitting member 120 toward the second imaging device 150.

The driver 163 includes, for example, a voice coil motor (VCM), and rotates the reflective member 161 according to a control signal supplied from the control device 170. The driver 163 may rotate the reflective member 161 around two axes of rotation, one extending in the X-direction and the other extending in the Y-direction. In short, the changing device 160 may be a two-axis gimbal mirror that can rotate the reflective member 161 around two axes of rotation. This allows the driver 163 to rotationally move the reflective member 161 to an angle at which light traveling along the optical axis of the first magnification optical system 131 (first optical axis AX1) is reflected along the optical axis of the second magnification optical system 132 (second optical axis AX2) and an angle at which light traveling away from the optical axis of the first magnification optical system 131 is reflected along the optical axis of the second magnification optical system 132. The changing device 160 is not limited to a two-axis gimbal mirror, and may be another device. For example, the changing device 160 may include two reflective members 161. In this case, the driver 163 may rotate the two reflective members 161 around different axes of rotation. The driver 163 may rotate the two reflective members 161 around axes of rotation that are perpendicular to each other. In short, the changing device 160 may be a two-axis galvanometer mirror. The changing device 160 is not limited to a device that rotates the reflective member 161 around two axes of rotation, and may be a device that rotates the reflective member around an axis of rotation (e.g., a one-axis gimbal mirror or a one-axis galvanometer mirror) or a device that rotates the reflective member around three axes of rotation (e.g., a three-axis gimbal mirror or a three-axis galvanometer mirror).

The control device 170 is, for example, a personal computer (PC) or the like. The control device 170 includes a memory 171, an interface 172, and a processor 173.

The memory 171 is an example of a storage unit, and stores data and programs. The memory 171 is, for example, a semiconductor memory, a magnetic disk, or the like. The memory 171 stores an operating system program, driver programs, and application programs used in processing by the processor 173 as well as various types of data used in operation of the imaging system 100.

The interface 172 is a device that allows the control device 170 to communicate with the display device 174. The interface 172 is, for example, a video input/output interface. The interface 172 may be a serial interface, a communication interface, or the like. The interface 172 outputs data supplied from the processor 173 to the display device 174.

The processor 173 is an example of a processing unit, and centrally controls the entire operation of the control device 170. The processor 173 is, for example, a central processing unit (CPU), a digital signal processor (DSP), a large-scale integration (LSI), an application specific integrated circuit (ASIC), a field programmable gate array (FPGA), or the like. The processor may be referred to as circuitry. The processor 173 executes various processes, based on the programs stored in the memory 171.

The control device 170 need not include the memory 171. The control device 170 may be housed in the housing 101. Some of the components of the control device 170 may be housed in the housing 101.

The display device 174 is a device that displays pictures, and is, for example, a liquid crystal display, an organic electro-luminescent (EL) display, or the like. The display device 174 displays a picture based on a display signal outputted from the control device 170. The display device 174 may be integrated with the control device 170.

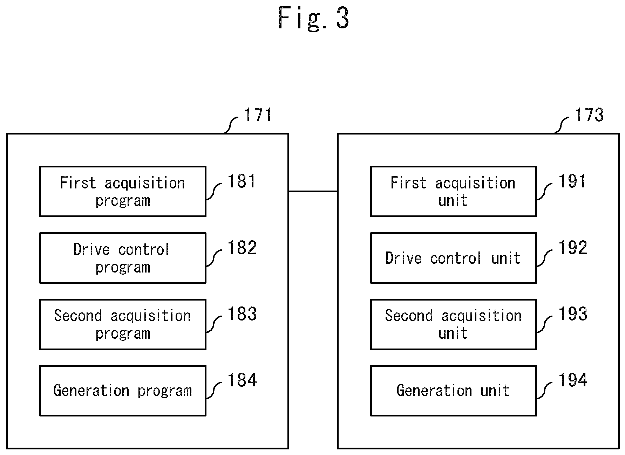

FIG. 3 is a functional block diagram of the memory 171 and the processor 173. The memory 171 stores a first acquisition program 181, a drive control program 182, a second acquisition program 183, and a generation program 184. The processor 173 includes a first acquisition unit 191, a drive control unit 192, a second acquisition unit 193, and a generation unit 194. These units are functional modules implemented by the processor 173 executing the first acquisition program 181, the drive control program 182, the second acquisition program 183, and the generation program 184 stored in the memory 171. These units may be implemented in the control device 170 as dedicated processing circuits.

The first acquisition unit 191 controls the first imaging device 140 to generate picture data every predetermined imaging cycle. Picture data generated by the first imaging device 140 is wide-angle picture data representing a wide-angle picture including a first object and a second object. The first acquisition unit 191 acquires wide-angle picture data generated by the first imaging device 140, and stores the data in the memory 171 in association with the time when the wide-angle picture data is generated.

The first acquisition unit 191 detects a first object and a second object from the wide-angle picture data, and generates position information of the first and second objects in the wide-angle picture. For example, the first acquisition unit 191 detects objects from the wide-angle picture data by template matching. The first acquisition unit 191 may detect a first object and a second object by inputting the wide-angle picture data into a classifier that is pre-trained to detect each object based on a predetermined machine learning technique, such as a convolutional neural network (CNN). The position information is, for example, the position coordinates of a bounding box surrounding the detected object. The position coordinates of a bounding box may be represented by two-dimensional coordinates in the wide-angle picture or by pixel numbers of pixels constituting the wide-angle picture.

The first acquisition unit 191 generates first identification information for identifying the first object and second identification information for identifying the second object. The first and second identification information may include the position information of the first and second objects, respectively. The first and second identification information may include information on a characteristic of the first and second objects, respectively. The information on a characteristic of an object may be information on at least one of the shape, size, color, and type of the object. The information on a characteristic of an object may be generated based on a feature of the object. The feature is, for example, a scale invariant feature transform (SIFT) feature or the like. The first and second identification information may include sub-picture data including the first and second objects, respectively. Sub-picture data is generated, for example, by extracting a region corresponding to a bounding box surrounding each object from wide-angle picture. The first and second identification information may include information on the time when the wide-angle picture data representing the wide-angle picture including the first and second objects is generated. The first and second identification information may include information on the amounts of change in positions of the first and second objects, respectively. The information on the amount of change in position of an object is, for example, the difference between position information of the object in a wide-angle picture acquired immediately before and position information of the object in a wide-angle picture acquired before that. The information on the amount of change in position of an object may be information based on position information of the object in three or more wide-angle pictures.

The drive control unit 192 controls the changing device 160, based on the wide-angle picture data. The drive control unit 192 supplies a control signal to the driver 163 to drive the driver 163, thereby rotating the reflective member 161. For example, the drive control unit 192 controls the rotation angle of the reflective member 161, based on the position information of the first object generated from the wide-angle picture data, so that an image of the first object is formed on the imaging surface of the second imaging element 151 via the magnification optical system 130. Further, the drive control unit 192 controls the rotation angle of the reflective member 161, based on the position information of the second object generated from the wide-angle picture data, so that an image of the second object is formed on the imaging surface of the second imaging element 151 via the magnification optical system 130. The memory 171 prestores a table representing the relationship between the position information of the object and the rotation angle of the reflective member 161; by referring to this table, the drive control unit 192 determines the rotation angle of the reflective member 161.

The drive control unit 192 may control the changing device 160 so that images of the first and second objects are alternately formed on the imaging surface of the second imaging element 151. For example, the drive control unit 192 rotates the reflective member 161 so that an image of the second object is formed on the imaging surface of the second imaging element 151 after an image of the first object is captured by the second imaging element 151. Further, the drive control unit 192 rotates the reflective member 161 so that an image of the first object is formed on the imaging surface of the second imaging element 151 after an image of the second object is captured by the second imaging element 151. This allows for obtaining magnified pictures of multiple objects with a single imaging element.

The second acquisition unit 193 controls the second imaging device 150 to generate picture data every predetermined imaging cycle. Picture data generated by the second imaging device 150 is magnified picture data representing a magnified picture including a first object or a magnified picture including a second object. The second acquisition unit 193 acquires magnified picture data generated by the second imaging device 150.

The second acquisition unit 193 may rotate and correct the magnified picture represented by the acquired magnified picture data. More specifically, since an image of an object rotates on the imaging surface of the second imaging element 151 according to the rotation angle of the reflective member 161, an image of the object included in a magnified picture also rotates. The second acquisition unit 193 rotates and corrects the magnified picture so that the rotated image of the object is oriented in a predetermined direction. The memory 171 may pre-store the relationship between the rotation angle for correcting the image of the object and the rotation angle of the reflective member 161. The memory 171 may pre-store the relationship between the rotation angle of the reflective member 161 and the position information of the object in the wide-angle picture.

The second acquisition unit 193 determines whether the acquired magnified picture data is generated after the time required to drive has elapsed since the time when driving the driver 163 is started. The time required to drive is the time required for transition from the state where an image of the first object is formed on the imaging surface of the second imaging element 151 to the state where an image of the second object is formed on the imaging surface of the second imaging element, or the time required for transition from the state where an image of the second object is formed on the imaging surface of the second imaging element 151 to the state where an image of the first object is formed on the imaging surface of the second imaging element. The time required to drive the driver 163 may be a fixed value or a value calculated based on the rotation angle of the reflective member 161 before the driver 163 is driven and a target rotation angle of the reflective member 161. The fixed value is, for example, 20 ms.

If the magnified picture data is generated before the elapse of the time required to drive the driver 163, the second acquisition unit 193 deletes the acquired magnified picture data. If the magnified picture data is generated after the elapse of the time required to drive the driver 163, the second acquisition unit 193 stores the acquired magnified picture data in the memory 171 in association with the wide-angle picture data generated at the same time. A magnified picture represented by magnified picture data acquired before the elapse of the time required to drive the driver 163 probably does not include a desired object. Thus the second acquisition unit 193 stores only magnified picture data generated after the elapse of the time required to drive the driver 163, thereby storing only magnified picture data representing a magnified picture including a desired object.

The second acquisition unit 193 associates identification information with the magnified picture data stored in the memory 171. The second acquisition unit 193 associates the first identification information with the magnified picture data when the magnified picture includes the first object, and associates the second identification information with the magnified picture data when the magnified picture includes the second object. Which object is included in the magnified picture is determined based on whether the drive control unit 192 controls the changing device 160 based on the position information of the first object or the position information of the second object. For example, the second acquisition unit 193 may associate the first identification information with magnified picture data acquired after the drive control unit 192 controls the changing device 160 based on the position information of the first object, and associate the second identification information with magnified picture data acquired after the drive control unit 192 controls the changing device 160 based on the position information of the second object.

The generation unit 194 generates a display signal for displaying an object picture on the display device 174 every predetermined imaging cycle. For example, the generation unit 194 acquires the wide-angle picture data with the latest generation time among pieces of wide-angle picture data stored in the memory 171. The generation unit 194 acquires the magnified picture data with the latest generation time among pieces of magnified picture data stored in the memory 171 and associated with the first identification information. The generation unit 194 acquires the magnified picture data with the latest generation time among pieces of magnified picture data stored in the memory 171 and associated with the second identification information. Based on the acquired data, the generation unit 194 generates a display signal for displaying the wide-angle picture, the magnified picture including the first object, and the magnified picture including the second object in different display areas of the display device 174, respectively. The generation unit 194 outputs the display signal to the display device 174 via the interface 172.

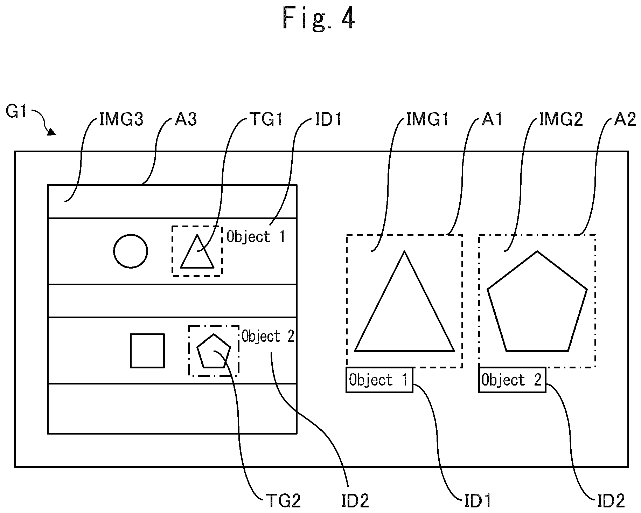

FIG. 4 illustrates an object picture G1 displayed on the display device 174. The object picture G1 includes a first display area A1, a second display area A2, and a third display area A3, as display areas. In the first display area A1 is displayed a magnified picture IMG1 of a first object TG1. In the second display area A2 is displayed a magnified picture IMG2 of a second object TG. In other words, the magnified picture IMG1 of the first object TG1 and the magnified picture IMG2 of the second object TG2 are displayed in different areas of the display device 174. This allows for grasping the characteristics of multiple objects simultaneously. Further, in the third display area A3 is displayed a wide-angle picture IMG3 including the first object TG1 and the second object TG2. This allows for further grasping the positional relationship between the multiple objects. The third display area A3 may be omitted. The third display area A3 may omit to display the wide-angle picture IMG3 including the first object TG1 and the second object TG2.

The object picture G1 is updated and displayed every predetermined update cycle. Since the first object TG1 and the second object TG2 are alternately imaged by the second imaging element 151 as described above, the magnified picture IMG1 of the first object TG1 and the magnified picture IMG2 of the second object TG2 are alternately displayed. For example, if the magnified picture IMG2 of the first object TG1 and the wide-angle picture IMG3 are updated at a first update time of the object picture G1, the magnified picture IMG2 of the second object TG2 and the wide-angle picture IMG3 are updated at a second update time thereafter. In this case, the cycle in which the magnified pictures IMG2 and IMG3 are updated is twice the cycle in which the wide-angle picture IMG1 is updated. The update cycle of the object picture G1 may be a cycle corresponding to the refresh rate of the display device 174 or a cycle different from that. The update cycle may be shorter than a cycle corresponding to 30 fps. This results in the magnified pictures IMG1 and IMG2 being visually recognized as smooth moving pictures when viewed by the human eye. The wide-angle picture IMG3 may be updated at any time without synchronizing its update cycle with that of the magnified picture IMG1 and/or the magnified picture IMG2.

The magnified pictures IMG1 and IMG2 and the wide-angle picture IMG3 may show the objects as identifiable. For example, the magnified pictures IMG1 and IMG2 and the wide-angle picture IMG3 may include first identification information for identifying the first object TG1 and second identification information for identifying the second object. In the example shown in FIG. 4, the magnified picture IMG1 of the first object TG1 includes information indicating the type of the first object (object 1) as first identification information ID1, and the magnified picture IMG2 of the second object TG2 includes information indicating the type of the second object (object 2) as second identification information ID2. The wide-angle picture IMG3 also includes the first identification information ID1 and the second identification information ID2 in the vicinities of the images of the first object TG1 and the second object TG2 so that the images of the objects are identified. The magnified pictures IMG1 and IMG2 and the wide-angle picture IMG3 may each show an image of an object in a manner depending on the object. In the example shown in FIG. 4, the first object TG1 and the second object TG2 included in the wide-angle picture IMG3 are surrounded by a dashed rectangle and a dashed-dotted rectangle, respectively. The magnified picture IMG1 of the first object TG1 is surrounded by a dashed rectangle, similarly to the first object TG1 included in the wide-angle picture IMG3. The magnified picture IMG2 of the second object TG2 is surrounded by a dashed-dotted rectangle, similarly to the second object TG2 included in the wide-angle picture IMG3. This allows for easily grasping the relationship between the objects included in the wide-angle picture and the objects included in the magnified pictures. The first and second identification information may be shown by changing the colors of the pictures or the images of the objects or by displaying identification symbols.

Only one of the magnified pictures and the wide-angle picture may show the objects as identifiable. Alternatively, the magnified picture and the wide-angle picture may show the objects as unidentifiable. In other words, multiple objects may be displayed in the same manner.

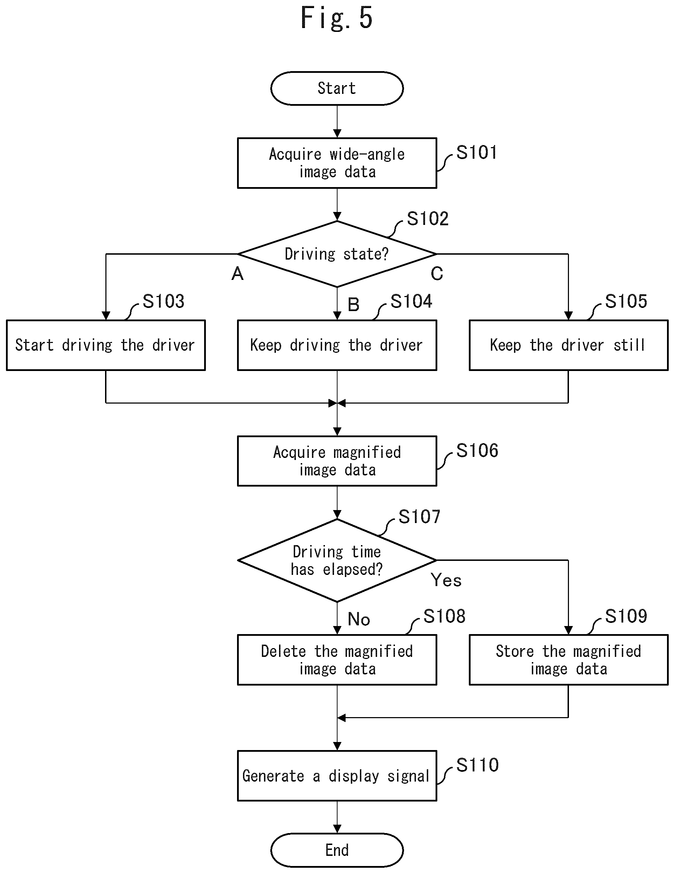

FIG. 5 is a flowchart showing the flow of a display method executed by the imaging system 100. The display method includes a process of generating a display signal for displaying the object picture shown in FIG. 4 on the display device 174. The display method is executed every predetermined imaging cycle. In the following description of FIG. 5, a first or second object whose magnified picture will be updated and displayed in response to a display signal may be referred to as an update target. Since the magnified pictures of the first and second objects are alternately updated, an update target differs from an object whose magnified picture has just been updated.

First, the first acquisition unit 191 acquires wide-angle picture data representing a wide-angle picture including a first object and a second object from the first imaging device 140 (step S101). The first acquisition unit 191 generates position information of the first and second objects in the wide-angle picture. The first acquisition unit 191 generates first identification information for identifying the first object and second identification information for identifying the second object.

Next, the drive control unit 192 determines the driving state of the driver 163 (step S102).

When the driver 163 has not yet been driven so that an image of the update target is formed on the imaging surface of the second imaging element 151 (A in step S102), the drive control unit 192 starts driving the driver 163 (step S103). The drive control unit 192 starts driving the driver 163, based on the position information of the update target, so that an image of the update target is formed on the imaging surface of the second imaging element 151.

When the time required to drive has not elapsed since the start of driving the driver 163 (B in step S102), the drive control unit 192 keeps driving the driver 163 so that an image of the update target is formed on the imaging surface of the second imaging element 151 (step S104). The time required to drive the driver 163 may be calculated based on the position information of the object in the wide-angle picture and the driving speed of the driver 163. The time required to drive the driver 163 may be a predetermined time. The time required to drive the driver 163 may be a time set by a user. The time required to drive the driver 163 may be acquired based on drive information of the driver. Alternatively, magnified picture data may be acquired (step S106) without determining the driving state of the driver (step S102 to step S105).

When the time required to drive has elapsed since the start of driving the driver 163 but magnified picture data of a magnified picture has not been stored in the memory 171 (C in step S102), the drive control unit 192 keeps the driver 163 still until magnified picture data is stored (step S105).

Next to step S103, S104, or S105, the second acquisition unit 193 acquires magnified picture data from the second imaging device 150 (step S106). The second acquisition unit 193 may rotate and correct the magnified picture.

Next, the second acquisition unit 193 determines whether the acquired magnified picture data is generated after the time required to drive has elapsed since the time when driving the driver 163 is started (step S107).

If the magnified picture data is generated before the elapse of the time required to drive (No in step S107), the second acquisition unit 193 deletes the acquired magnified picture data (step S108). The second acquisition unit 193 may store the acquired magnified picture data in the memory 171 in association with identification information indicating that no object is included, without deleting the data.

If the magnified picture data is generated after the elapse of the time required to drive (Yes in step S107), the second acquisition unit 193 stores the magnified picture data in the memory 171 (step S109). Further, the second acquisition unit 193 associates first or second identification information with the magnified picture data stored in the memory 171.

Next, the generation unit 194 generates a display signal (step S110). The generation unit 194 generates a display signal for displaying a wide-angle picture, a magnified picture including the first object, and a magnified picture including the second object in different display areas of the display device 174, based on the wide-angle picture data and the magnified picture data stored in the memory 171. The generation unit 194 outputs the display signal to the display device 174 via the interface 172. This completes the display method.

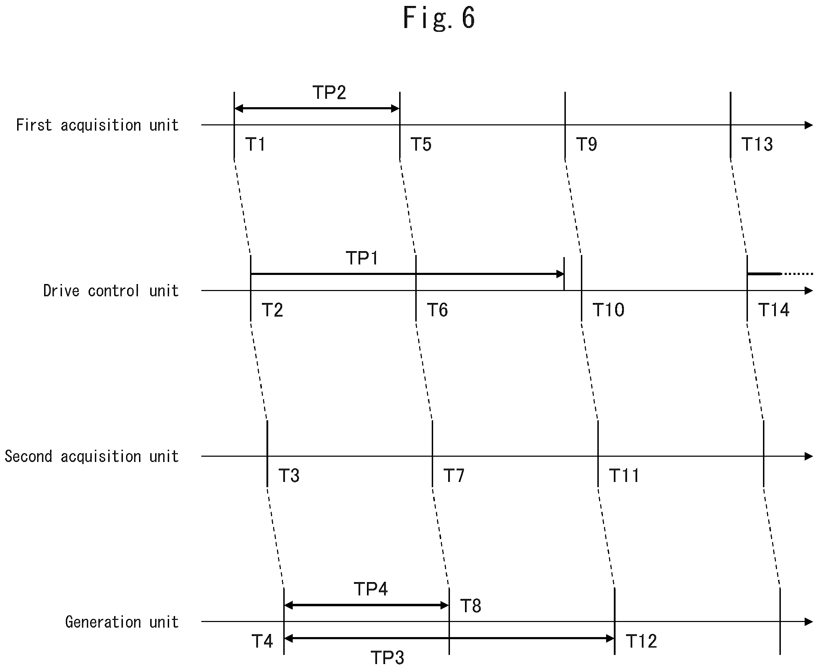

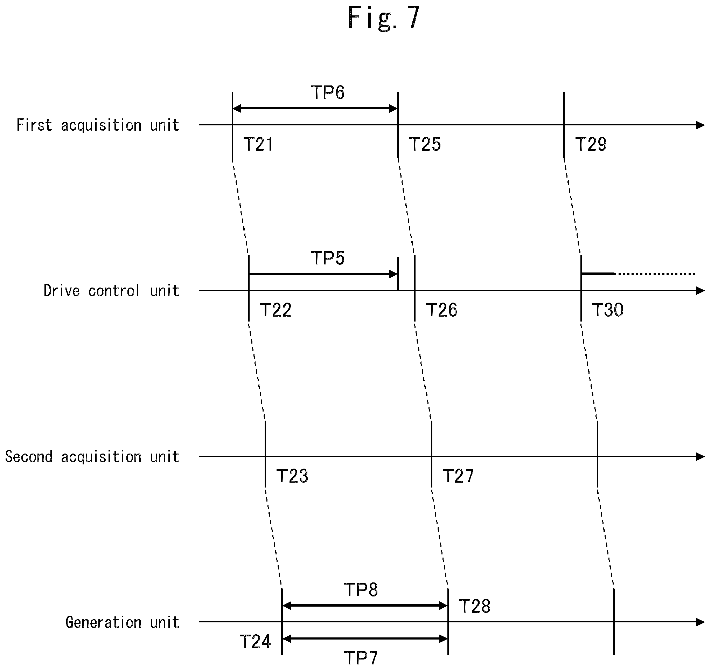

FIGs. 6 and 7 are timing charts for further explaining the flow of the display method.

FIG. 6 shows an example in which the time TP1 required to drive the driver 163 is longer than the imaging cycle TP2. In FIG. 6, time T1 is assumed to be the time when driving the driver 163 has not yet started and when magnified picture data associated with second identification information has just been stored in the memory 171. In other words, at time T1, the first object is the update target.

At time T1, the display method is executed. At time T1, the first acquisition unit 191 acquires wide-angle picture data from the first imaging device 140 (step S101). At time T2, since the driver 163 has not yet been driven, the drive control unit 192 starts driving the driver 163 so that an image of the first object, which is the update target, is formed on the imaging surface of the second imaging element 151 (step S103). At time T3, the second acquisition unit 195 acquires magnified picture data from the second imaging device 150 (step S106). At this time, since the time TP1 required to drive the driver 163 has not elapsed and the driver 163 is being driven, the second acquisition unit 193 deletes the magnified picture data (step S109). At time T4, the generation unit 196 generates and outputs a display signal for displaying a wide-angle picture and magnified pictures (step S110). The wide-angle picture displayed at this time is represented by the wide-angle picture data acquired at time T1; the magnified pictures are the same as those displayed by the display signal generated immediately before time T1.

At time T5, when the imaging cycle TP2 has elapsed since time T1, the display method is executed again. At time T5, the first acquisition unit 191 acquires wide-angle picture data from the first imaging device 140 (step S101). At time T6, since the driver 163 is driven, the drive control unit 192 keeps driving the driver 163 (step S104). At time T7, the second acquisition unit 195 acquires a magnified picture from the second imaging device 150. At this time, since the time TP1 required to drive the driver 163 has not elapsed and the driver 163 is being driven, the second acquisition unit 193 deletes the magnified picture data (step S109). At time T8, the generation unit 196 generates and outputs a display signal for displaying a wide-angle picture and magnified pictures (step S110). The wide-angle picture displayed at this time is represented by the wide-angle picture data acquired at time T5; the magnified pictures are the same as those displayed by the display signal generated at time T4.

At time T9, when the imaging cycle TP2 has elapsed since time T5, the display method is executed again. At time T9, the first acquisition unit 191 acquires wide-angle picture data from the first imaging device 140 (step S101). At time T10, since driving the driver 163 is finished but magnified picture data of a magnified picture including the update target has not yet been stored, the drive control unit 192 keeps the driver 163 still (step S105). At time T11, the second acquisition unit 195 acquires a magnified picture, and stores the magnified picture in the memory 171 in association with first identification information (step S108). At time T12, the generation unit 196 generates and outputs a display signal for displaying a wide-angle picture and magnified pictures (step S110). The wide-angle picture displayed at this time is represented by the wide-angle picture data acquired at time T5; the magnified picture of the first object is acquired at time T11; the magnified picture of the second object is the same as that displayed by the display signal generated at time T8.

At time T13, when the imaging cycle TP2 has elapsed since time T9, the display method is executed again. At time T13, the first acquisition unit 191 acquires wide-angle picture data from the first imaging device 140 (step S101). At time T14, since the driver 163 has not yet been driven so that an image of the second object, which is the next update target, is formed on the imaging surface of the second imaging element 151, the drive control unit 192 starts driving the driver 163 so that an image of the second object is formed on the imaging surface of the second imaging element 151 (step S103). Thereafter, the same process is repeated.

As shown in FIG. 6, if the time TP1 required to drive the driver 163 is longer than the imaging cycle TP2, the update cycle TP3 of the magnified picture displayed on the display device 174 is longer than the update cycle TP4 of the wide-angle picture.

FIG. 7 shows an example in which the time TP5 required to drive the changing device 160 is shorter than the imaging cycle TP6. In FIG. 7, time T21 is assumed to be the time when driving the driver 163 has not yet started and when magnified picture data associated with second identification information has just been stored in the memory 171. In other words, at time T21, the first object is the update target.

At time T21, the display method is executed. At time T21, the first acquisition unit 191 acquires wide-angle picture data from the first imaging device 140 (step S101). At time T22, since the driver 163 has not yet been driven, the drive control unit 192 starts driving the driver 163 so that an image of the first object, which is the update target, is formed on the imaging surface of the second imaging element 151 (step S103). At time T23, the second acquisition unit 195 acquires magnified picture data from the second imaging device 150 (step S106). At this time, since the time TP5 required to drive the driver 163 has not elapsed and the driver 163 is being driven, the second acquisition unit 193 deletes the magnified picture data (step S109). At time T24, the generation unit 196 generates and outputs a display signal for displaying a wide-angle picture and magnified pictures (step S110). The wide-angle picture displayed at this time is represented by the wide-angle picture data acquired at time T21; the magnified pictures are the same as those displayed by the display signal generated immediately before time T1.

At time T25, when the imaging cycle TP6 has elapsed since time T21, the display method is executed again. At time T21, the first acquisition unit 191 acquires wide-angle picture data from the first imaging device 140 (step S101). At time T26, since driving the driver 163 is finished but magnified picture data of a magnified picture including the update target has not yet been stored, the drive control unit 192 keeps the driver 163 still (step S105). At time T27, the second acquisition unit 195 acquires a magnified picture, and stores the magnified picture in the memory 171 in association with first identification information (step S108). At time T28, the generation unit 196 generates and outputs a display signal for displaying a wide-angle picture and magnified pictures (step S110). The wide-angle picture displayed at this time is represented by the wide-angle picture data acquired at time T25; the magnified picture of the first object is acquired at time T27; the magnified picture of the second object is the same as that displayed by the display signal generated at time T24.

At time T29, when the imaging cycle TP6 has elapsed since time T25, the display method is executed again. At time T29, the first acquisition unit 191 acquires wide-angle picture data from the first imaging device 140 (step S101). At time T30, since the driver 163 has not yet been driven so that an image of the second object, which is the next update target, is formed on the imaging surface of the second imaging element 151, the drive control unit 192 starts driving the driver 163 so that an image of the second object is formed on the imaging surface of the second imaging element 151 (step S103). Thereafter, the same process is repeated.

As shown in FIG. 7, if the time TP1 required to drive the driver 163 is longer than the imaging cycle TP2, the update cycle TP7 of the magnified picture displayed on the display device 174 equals the update cycle TP8 of the wide-angle picture.

In this way, the generation unit 194 of the imaging system 100 according to the first embodiment generates a display signal for displaying magnified pictures of first and second objects in different areas of the display device 174. This allows for grasping the characteristics of multiple objects simultaneously.

Further, the second acquisition unit 193 of the imaging system 100 associates identification information for identifying an object with magnified picture data acquired after the elapse of the time required to drive the driver 163. The generation unit 194 generates a display signal for displaying a magnified picture associated with the identification information on the display device 174. This allows for displaying only a magnified picture including an object.

In the present embodiment, the wide-angle picture may include a first object, a second object, and a third object. In this case, the object picture G1 further includes a third display area where a magnified picture including the third object is displayed, and the generation unit 194 generates a display signal for displaying a magnified picture including the first object, a magnified picture including the second object, and a magnified picture including the third object in different areas of the display device 174. In the display method, the first, second, and third objects are sequentially set as an update target, and a magnified picture including the first object, a magnified picture including the second object, and a magnified picture including the third object are sequentially updated and displayed on the display device 174. Similarly, magnified pictures of four or more objects may be displayed in different areas of the display device 174.

Although the magnified pictures are alternately displayed in the present embodiment, the present invention is not limited to such an example. The magnified pictures may be displayed in any order. For example, the magnified picture of the first object may be successively updated and displayed a predetermined number of times, and then the magnified picture of the second object may be successively updated and displayed a predetermined number of times. In this case, the number of times the magnified picture of the first object is successively updated and displayed may differ from the number of times the magnified picture of the second object is successively updated and displayed. The number of times an object is successively updated and displayed may be set based on the wide-angle picture data. For example, the number of times an object is successively updated and displayed may be set based on the position, speed, and appearance characteristics of the object in the wide-angle picture. The speed of an object may be calculated by detecting the object from multiple wide-angle pictures. Similarly, the magnified picture may be updated and displayed at any update frequency. The update frequency of the magnified picture of the first object may differ from that of the magnified picture of the second object. The update frequency of a magnified picture may be set based on the wide-angle picture data. For example, the update frequency of a magnified picture may be set based on the position, speed, and appearance characteristics of the object in the wide-angle picture.

In the present embodiment, the first acquisition unit 191 may estimate and generate the position information of the update target, based on multiple pieces of wide-angle picture data. For example, the first acquisition unit 191 detects a first object and a second object from wide-angle picture data acquired in the immediately preceding step S101 and at least one wide-angle picture data acquired before that, and associates the detected first objects with each other and the detected second objects with each other, using a known tracking technique. The first acquisition unit 191 estimates the current position information of the update target, based on the change in the positions of the first and second objects between the multiple wide-angle pictures. For example, the first acquisition unit 191 may apply a Kalman filter to estimate the current position information of the update target. This allows for displaying the object near the center of the magnified picture.

### [Modified example 1 of the first embodiment]

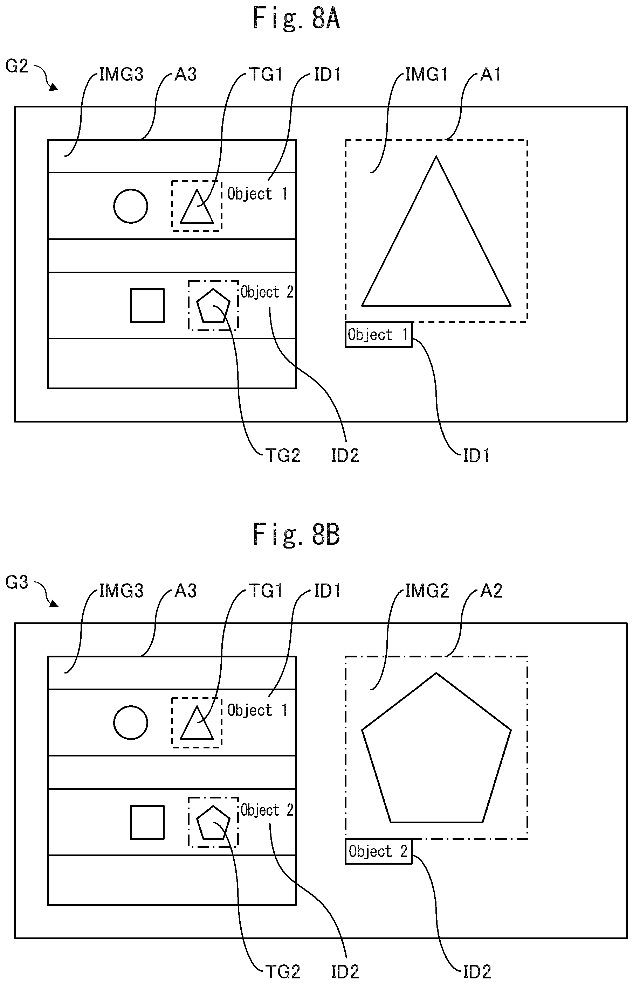

FIGs. 8(A) and 8(B) illustrate an example of object pictures displayed on the display device 174 in modified example 1 of the first embodiment. An object picture G2 shown in FIG. 8(A) includes a first display area A1 where a magnified picture IMG1 of a first object is displayed and a third display area A3 where a wide-angle picture IMG3 is displayed, but does not include a second display area A2 where a magnified picture IMG2 of a second object is displayed. An object picture G3 shown in FIG. 8(B) includes a second display area A2 where the magnified picture IMG2 of the second object is displayed and a third display area A3 where the wide-angle picture IMG3 is displayed, but does not include a first display area A1 where the magnified picture IMG1 of the first object is displayed. The other components included in the object pictures G2 and G3 are similar to those of the object picture G1 shown in FIG. 4, and thus are assigned the same reference numerals and will not be described further.

In the present modified example, the display device 174 alternately displays the object picture G2 including a magnified picture IMG1 of a first object shown in FIG. 8(A) and the object picture G3 including a magnified picture IMG2 of a second object shown in FIG. 8(B) every predetermined switching cycle. The switching cycle may be a fixed value or may be set by a user. The fixed value is, for example, 5 seconds. The switching cycle may be nonuniform. More specifically, the time during which the object picture G2 is displayed may differ from the time during which the object picture G3 is displayed.

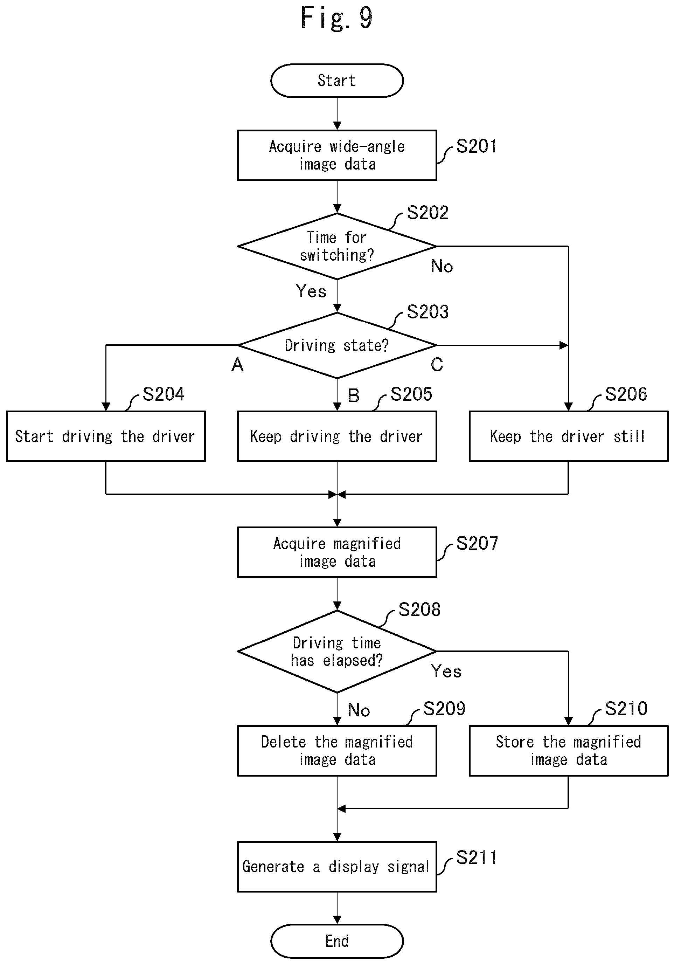

FIG. 9 is a flowchart showing the flow of a display method executed by an imaging system according to the present modified example.

First, the first acquisition unit 191 acquires wide-angle picture data from the first imaging device 140 as in step S101 (step S201). The first acquisition unit 191 generates position information of a first object and a second object. The first acquisition unit 191 generates first identification information for identifying the first object and second identification information for identifying the second object.

Next, the drive control unit 192 determines whether the time for switching between the object pictures G2 and G3 has come (step S202). The time for switching is the time when the switching cycle has elapsed since a switch of object pictures displayed on the display device 174.

When the time for switching has come (Yes in step S202), the drive control unit 192 determines the driving state of the driver 163 as in step S102 (step S203). When the time for switching has not come (No in step S202), the drive control unit 192 keeps the driver 163 still (step S206).

The processing in steps S203 to S211 is similar to the processing in steps S102 to S110. Magnified picture data may be acquired (step S207) without determining the driving state of the driver (step S202 to step S206).

In this way, the generation unit 194 of the imaging system 100 in modified example 1 of the first embodiment generates display signals for alternately displaying magnified pictures of first and second objects on the display device 174. This allows for grasping the characteristics of the objects in more detail than when a magnified picture IMG1 of a first object and a magnified picture IMG2 of a second object are displayed simultaneously.

The wide-angle picture may include a first object, a second object, and a third object. In this case, the generation unit 194 generates display signals for sequentially displaying an object picture including a magnified picture of the first object, an object picture including a magnified picture of the second object, and an object picture including a magnified picture of the third object on the display device 174. In the display method, the first, second, and third objects are sequentially set as an update target. Similarly, object pictures including magnified pictures of four or more objects may be sequentially displayed on the display device 174.

### [Modified example 2 of the first embodiment]

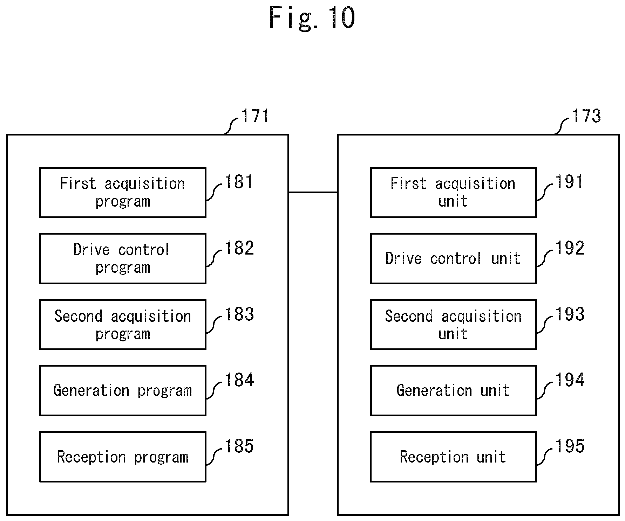

FIG. 10 is a functional block diagram of the memory 171 and the processor 173 according to modified example 2 of the first embodiment. In the present modified example, the memory 171 further stores a reception program 195, and the processor 173 further includes a reception unit 195 as a functional block. The reception unit 195 is a functional module implemented by the processor 173 executing the reception program 185 stored in the memory 171. The reception unit 195 may be implemented in the control device 170 as a dedicated processing circuit.

The reception unit 195 receives selection of first or second object by user operation. The selection by user operation is received, for example, via an input device, such as a keyboard or a mouse, connected to the control device 170. In this case, the user operation may be operation of selecting one of the magnified picture IMG1 of the first object and the magnified picture IMG2 of the second object displayed on the display device 174. The reception unit 195 stores information indicating the selected object in the memory 171.

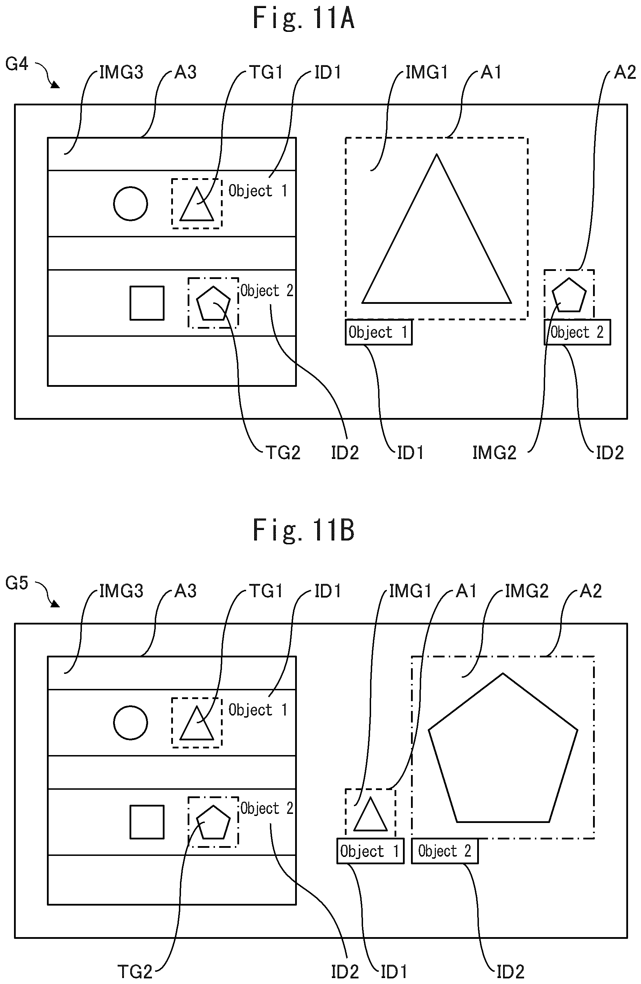

FIGs. 11(A) and 11(B) illustrate an example of object pictures displayed on the display device 174 in the present modified example. In an object picture G4 shown in FIG. 11(A), a magnified picture IMG1 of a first object is displayed larger than a magnified picture IMG2 of a second object. In an object picture G5 shown in FIG. 11(B), the magnified picture IMG2 of the second object is displayed larger than the magnified picture IMG1 of the first object. The other components included in the object pictures G4 and G5 are similar to those of the object picture G1 shown in FIG. 4, and thus are assigned the same reference numerals and will not be described further.

In the present modified example, when a display signal is generated in step S110 of the display method, the generation unit 194 acquires information indicating an object selected by user operation from the memory 171. If the first object is selected, the generation unit 194 generates a display signal for displaying the object picture G4 in which the magnified picture IMG1 of the first object is magnified. If the second object is selected, the generation unit 194 generates a display signal for displaying the object picture G5 in which the magnified picture IMG2 of the second object is magnified.

In this way, the generation unit 194 of the imaging system 100 in modified example 2 of the first embodiment generates a display signal for causing the magnified picture of an object selected by user operation from among the magnified pictures of the first and second objects to be displayed larger on the display device 174. This allows for grasping the characteristics of a desired object in detail while grasping the characteristics of multiple objects simultaneously.

In the present modified example, the generation unit 194 may cause only the magnified picture of an object selected by user operation from among the magnified pictures of the first and second objects to be displayed larger, and omit to display the magnified pictures of objects that are not selected by the user on the display device 174. This allows for grasping the characteristics of a desired object in more detail.

### [Modified example 3 of the first embodiment]

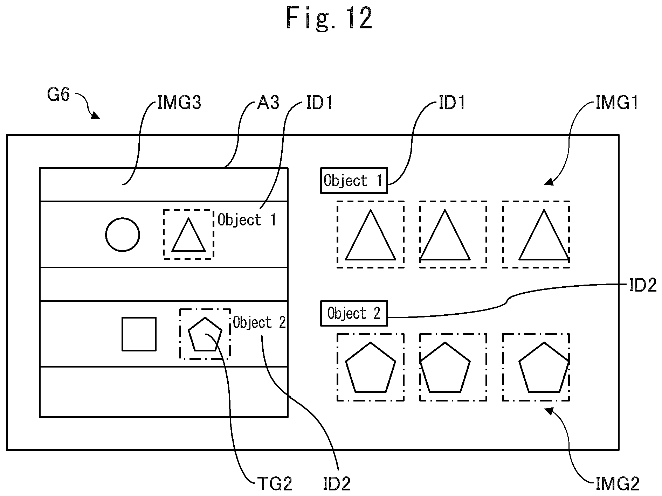

FIG. 12 illustrates an example of an object picture G6 displayed on the display device 174 in modified example 3 of the first embodiment. The object picture G6 includes magnified pictures IMG1 of a first object arranged in chronological order and magnified pictures IMG2 of a second object arranged in chronological order. The other components included in the object picture G6 are similar to those of the object picture G1 shown in FIG. 4, and thus are assigned the same reference numerals and will not be described further.

The magnified pictures IMG1 of the first object are pictures selected by a predetermined method from among the magnified pictures stored in the memory 171 and associated with first identification information. The predetermined method may be a method of selecting magnified picture data in descending order of generation time. The predetermined method may be a method of selecting magnified picture data whose generation time satisfies a predetermined condition (e.g., 5 seconds ago, 10 seconds ago, and 15 seconds ago) or a method of selecting magnified picture data in which the change in a feature of the first object is greater than that in other pictures. Similarly, the magnified pictures IMG2 of the second object are pictures selected by a predetermined method from among the magnified pictures stored in the memory 171 and associated with second identification information.

In the present modified example, when a display signal is generated in step S110 of the display method, the generation unit 194 selects and acquires magnified pictures by a predetermined method from among the magnified pictures stored in the memory 171 and associated with the first identification information. Further, the generation unit 194 selects and acquires magnified pictures by a predetermined method from among the magnified pictures stored in the memory 171 and associated with the second identification information. The generation unit 194 generates a display signal for displaying the acquired magnified pictures on the display device 174 with the magnified pictures arranged in chronological order.

In this way, the generation unit 194 of the imaging system 100 in modified example 3 of the first embodiment generates a display signal for displaying magnified pictures of a first object and magnified pictures of a second object with the magnified pictures of each object arranged in chronological order. This allows for grasping the characteristics of multiple objects at different times.

In the present modified example, magnified pictures of only one of the first and second objects may be arranged in chronological order and displayed. For example, magnified pictures of the first or second object selected by user operation may be arranged in chronological order and displayed.

### [Modified example 4 of the first embodiment]

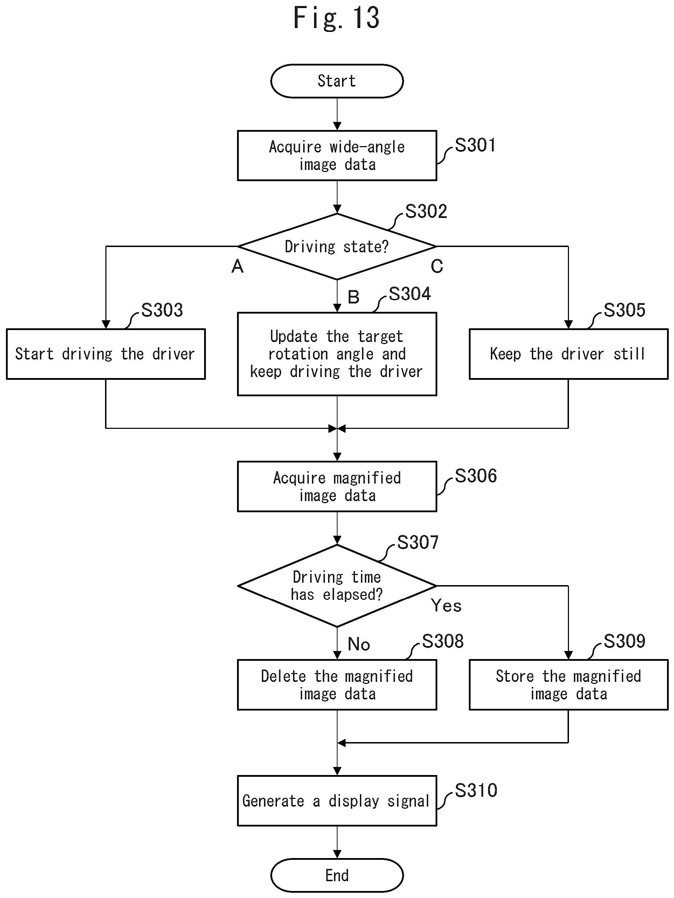

FIG. 13 is a flowchart showing the flow of a display method executed by the imaging system 100 according to modified example 4 of the first embodiment.

The processing in steps S301 to S303 is similar to the processing in steps S101 to S103.

In step S302, when the time required to drive has not elapsed since the start of driving the driver 163 (B in step S302), the drive control unit 192 updates the target rotation angle of the reflective member 161 and keeps driving the driver 163 (step S304). More specifically, the drive control unit 192 changes the target rotation angle of the reflective member 161 from a rotation angle set based on the position information of the object generated immediately before the time when driving the driver 163 is started to a rotation angle set based on the position information of the object generated most recently. The drive control unit 192 keeps driving the driver 163 so that the rotation angle of the reflective member 161 equals the changed rotation angle.

The processing in steps S305 to S310 is similar to the processing in steps S101 to S110.

In this way, the drive control unit 192 of the imaging system 100 in modified example 4 of the first embodiment updates the target rotation angle of the reflective member 161 while the driver 163 is driven. This allows for displaying the first or second object near the center of the magnified picture even if the object moves while the driver 162 is driven so that an image of the object is formed on the imaging surface of the second imaging element 151.

### [Modified example 5 of the first embodiment]

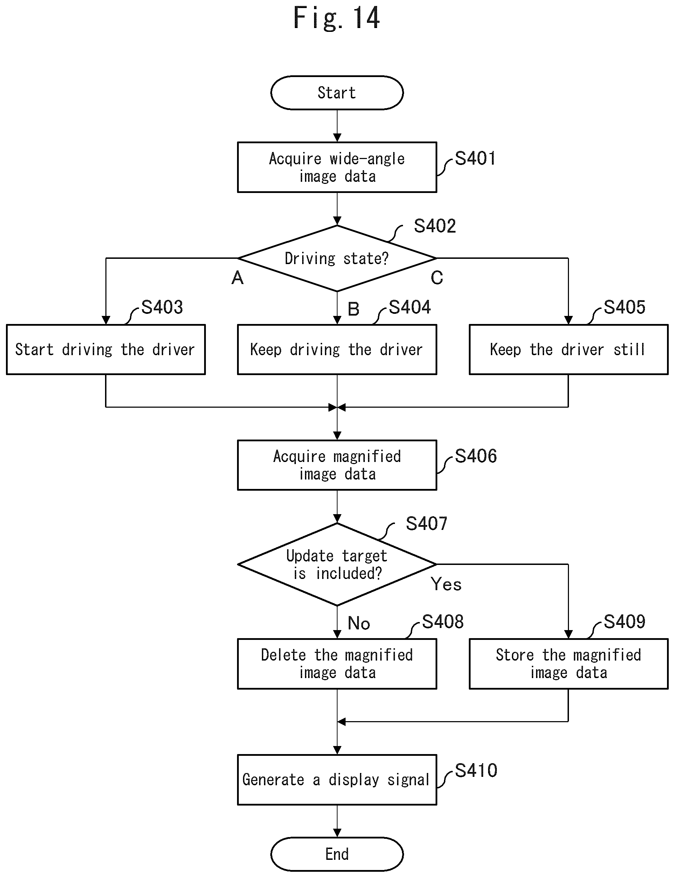

FIG. 14 is a flowchart showing the flow of a display method executed by the imaging system 100 according to modified example 5 of the first embodiment.

The processing in steps S401 to S406 is similar to the processing in steps S101 to S106. Magnified picture data may be acquired (step S406) without determining the driving state of the driver (step S402 to step S405).

Next to step S406, the second acquisition unit 193 determines whether the magnified picture represented by the magnified picture data includes an update target (step S407). For example, the second acquisition unit 193 detects an update target from the magnified picture data by template matching to determine whether the magnified picture data includes an update target.

If the magnified picture does not include an update target (No in step S407), the second acquisition unit 193 deletes the acquired magnified picture data (step S408). If the magnified picture includes an update target (Yes in step S407), the second acquisition unit 193 stores the magnified picture data in the memory 171 in association with the first or second identification information (step S409). The second acquisition unit 193 may store the acquired magnified picture data in the memory 171 in association with identification information indicating that no object is included, without deleting the data. Next, the generation unit 194 generates a display signal (step S410). The processing in steps S408 to S410 is similar to the processing in steps S108 to S110.

In this way, the second acquisition unit 193 of the imaging system 100 in modified example 5 of the first embodiment stores the magnified picture data when the magnified picture includes an update target. More specifically, the control device 170 does not update the display in the first display area when it is determined that the first object is not displayed in the magnified picture in the case where the update target is the first object. The control device 170 does not update the display in the second display area when it is determined that the second object is not displayed in the magnified picture in the case where the update target is the second object. Thus the first or second object is displayed in the magnified picture even if the object moves while the driver 163 is driven or if an error occurs in the rotation angle of the reflective member 161.

In the present modified example, when the magnified picture includes an object different from the update target, the second acquisition unit 193 may store the magnified picture data in the memory 171 in association with the identification information corresponding to this object. For example, when the update target is the first object, the second acquisition unit 193 may further determine whether the magnified picture includes the second object in step S407. When the magnified picture includes the second object, the second acquisition unit 193 stores the magnified picture data in the memory 171 in association with the second identification information instead of deleting the magnified picture data.

In the present modified example, when the magnified picture does not include an update target, the generation unit 194 may cause a blank picture to be displayed instead of the magnified picture. More specifically, the control device 170 causes a blank picture to be displayed in the first display area when it is determined that the first object is not displayed in the magnified picture in the case where the update target is the first object. The control device 170 causes a blank picture to be displayed in the second display area when it is determined that the second object is not displayed in the magnified picture in the case where the update target is the second object. The blank picture is pre-stored in the memory 171 and does not include an object. In this case, when it is determined that no update target is displayed in the magnified picture, the second acquisition unit 193 stores, in step S408, information indicating that no update target is displayed in the magnified picture in the memory 171. In step S410, if information indicating that no update target is displayed in the magnified picture is stored in the memory 171, the generation unit 194 generates a display signal for displaying the blank picture in the display area of the display device 174 corresponding to the update target. This allows for grasping that no object is detected.

### [Second embodiment]

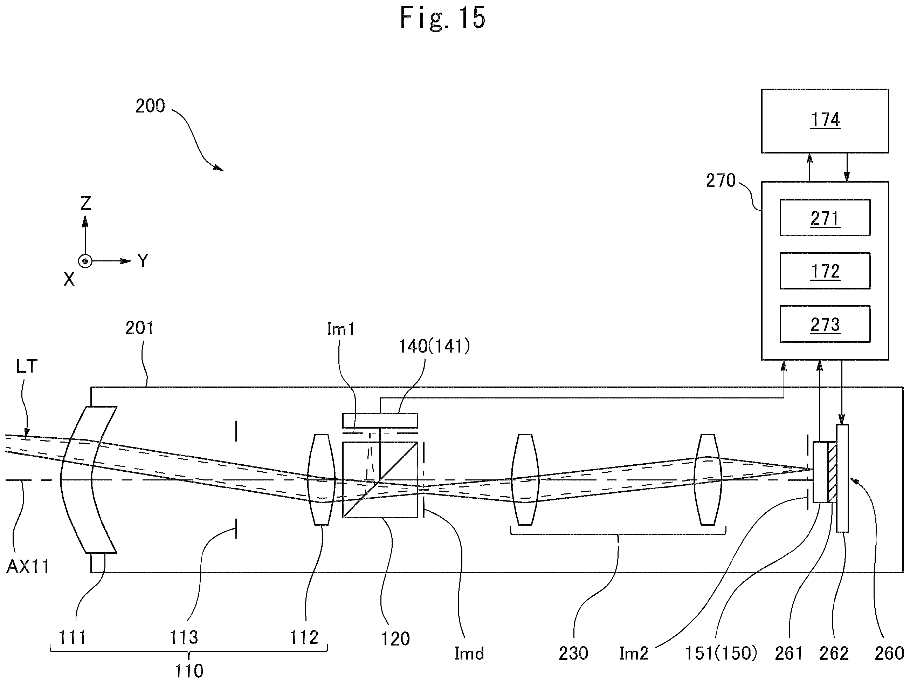

FIG. 15 illustrates the general configuration of an imaging system 200 according to a second embodiment. The imaging system 200 includes an imaging optical system 110, a light-splitting member 120, a magnification optical system 230, a first imaging device 140, a second imaging device 150, a changing device 260, a control device 270, and a housing 201. The housing 201 houses and holds the imaging optical system 110, the light-splitting member 120, the magnification optical system 230, the first imaging device 140, the second imaging device 150, and the changing device 260. Of the components of the imaging system 200, components similar to those of the imaging system 200 are assigned the same reference numerals and will not be described in detail. The light-splitting member 120 may be disposed midway through the imaging optical system 110. In this case, the light-splitting member 120 may split light LT that has passed through part of the imaging optical system 110. The light-splitting member 120 may be part of the imaging optical system 110. For example, the rear lens 112 may be disposed between the light-splitting member 112 and a first image plane Im1 and between the light-splitting member 120 and an intermediate image plane Imd.

In the present embodiment, the optical axis of the imaging optical system 110 and that of the magnification optical system 230, which is coaxial with the imaging optical system 110, may be collectively referred to as an optical axis AX11. The direction along the optical axis AX11 of the imaging optical system 110 and the magnification optical system 230 is referred to as a Y-direction. The direction to the front of the first imaging device 140 is referred to as a Z-direction. The direction perpendicular to the Y- and Z-directions is referred to as an X-direction. The X-, Y-, and Z-directions are perpendicular to each other. For example, as shown in FIG. 15, the Z-direction may be a vertical direction, and the X- and Y-directions may be horizontal directions.

The magnification optical system 230 magnifies and re-forms part of the intermediate image Imd formed by the light LT that has passed through the imaging optical system 110, thereby forming a second image Im2. The magnification optical system 230 may re-form the intermediate image Imd formed by the light LT that has passed through the imaging optical system 110 as a second image Im2 with the same size. The magnification optical system 230 may reduce the intermediate image Imd formed by the light LT that has passed through the imaging optical system 110 and re-form an image as a second image Im2. The magnification optical system 230 may magnify and re-form part of the intermediate image Imd, thereby forming a second image Im2. The position where the intermediate image Imd is formed may be conjugate to the position where the first image Im1 is formed. Re-forming at least part of the intermediate image Imd as a second image Im2 by the magnification optical system 230 produces an effect equivalent to re-forming at least part of the first image Im1 (a portion at the same relative position as the intermediate image Imd). In other words, the magnification optical system 230 reforms part of the intermediate image Imd corresponding to part of the first image Im1. The position where the intermediate image Imd is formed may be conjugate to the position where the first image Im1 is formed.

The magnification optical system 230 may be telecentric on the side of the intermediate image Imd (light-splitting member 120). This prevents the chief ray from diverging near the intermediate image Imd, and allows for reducing the diameter of the magnification optical system 230. This allows for downsizing the imaging system 200, reducing the manufacturing cost, and further reducing variations in the incident angle of light incident on the light-splitting member 120 (light-splitting plane). Although both the imaging optical system 110 and the magnification optical system 230 are telecentric on the side of the intermediate image Imd (light-splitting member 120) in the example shown in FIG. 15, the present invention is not limited to such an example. For example, only one of the imaging optical system 110 and the magnification optical system 230 may be telecentric on the side of the intermediate image Imd (light-splitting member 120).

The magnification optical system 230 may be composed of one or more lenses. The magnification optical system 230 may include an optical member other than a lens in addition to one or more lenses.

The changing device 260 includes a holder 261 and a driver 262. The holder 261 holds the second imaging device 250. The driver 262 includes, for example, a linear motor, a stepping motor, or the like, and moves the holder 261 according to a control signal supplied from the control device 270. The driver 262 can translate the holder 261 holding the second imaging element 251 in two directions (e.g., the X- and Z-directions) intersecting the optical axis AX11 of the magnification optical system 230. Driving by the driver 262 moves the second imaging element 251 in the X- and Z-directions to change the imaging range of the intermediate image Imd captured by the second imaging element 251. This also changes the imaging field of view on the object side (target side) captured by the second imaging element 251.

The control device 270 includes a memory 271, an interface 172, and a processor 273. The memory 271 stores data and programs, similarly to the memory 171. The processor 273 centrally controls the entire operation of the control device 270, similarly to the processor 173.

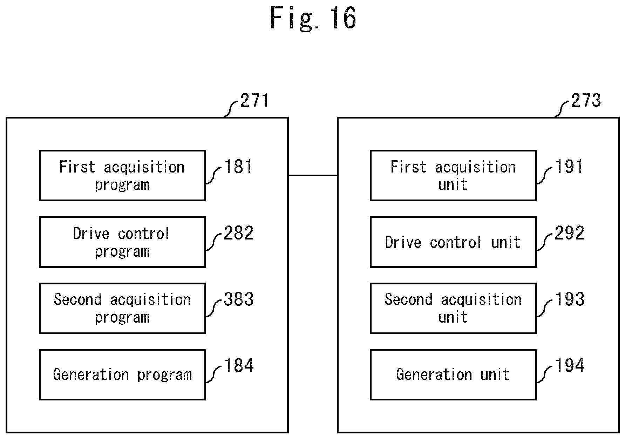

FIG. 16 is a functional block diagram of the memory 271 and the processor 273. The memory 271 differs from the memory 171 in that the former stores a drive control program 282 instead of the drive control program 182. The processor 273 differs from the processor 173 in that the former includes a drive control unit 292 as a functional block instead of the drive control unit 192. The drive control unit 292 is a functional module implemented by the processor 273 executing the drive control program 282. The drive control unit 292 may be implemented in the control device 270 as a dedicated processing circuit.

The drive control unit 292 controls the changing device 260, based on the wide-angle picture data. The drive control unit 292 supplies a control signal to the driver 262 to drive the driver 262, thereby moving the holder 261. For example, the drive control unit 292 translates the holder 261 holding the second imaging element 151, based on the position information of the first object generated from the wide-angle picture data, so that an image of the first object is formed on the imaging surface of the second imaging element 151 via the magnification optical system 230. Further, the drive control unit 192 translates the holder 261 holding the second imaging element 151, based on the position information of the second object generated from the wide-angle picture data, so that an image of the second object is formed on the imaging surface of the second imaging element 151 via the magnification optical system 230. The relationship between the position information of the object and the position of the holder 261 may be pre-stored in the memory 171.

The drive control unit 292 may control the changing device 260 so that images of the first and second objects are alternately formed on the imaging surface of the second imaging element 151. For example, the drive control unit 192 controls the position of the holder 261 so that an image of the second object is formed on the imaging surface of the second imaging element 151 after an image of the first object is captured by the second imaging element 151. Further, the drive control unit 292 controls the position of the holder 261 so that an image of the first object is formed on the imaging surface of the second imaging element 151 after an image of the second object is captured by the second imaging element 151.

The display method executed by the imaging system 200 is similar to the display method executed by the imaging system 100 except that the position of the holder 261 is controlled instead of the rotation angle of the reflective member 161.

### [Third embodiment]

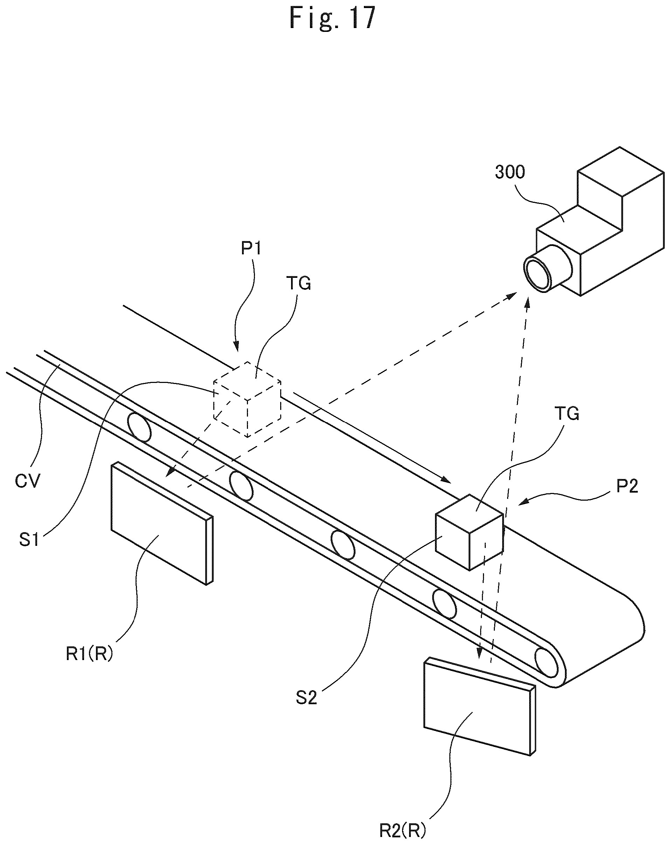

FIG. 17 schematically illustrates an imaging system 300 according to a third embodiment of the present invention. In the present embodiment, a first reflective member R1 and a second reflective member R2 are disposed at different positions, together with the imaging system 300, as shown in FIG. 17. As an example, the first reflective member R1 and the second reflective member R2 may be disposed to reflect light from different portions of an object TG toward the imaging system 300, respectively. The first reflective member R1 and the second reflective member R2 may be disposed to reflect light from overlapping portions of an object TG toward the imaging system 300, respectively.

The first reflective member R1 may be a total reflection mirror or a semi-transparent mirror. The shape of the light-reflecting surface of the first reflective member R1 may be flat, convex, or concave. Similarly, the second reflective member R2 may be a total reflection mirror or a semi-transparent mirror. The shape of the light-reflecting surface of the second reflective member R2 may be flat, convex, or concave. The imaging system 300 images an object TG to generate wide-angle picture data representing a wide-angle picture including the object TG. More specifically, the imaging system 300 may capture an image of a first portion of the object TG by receiving light from the first portion of the object TG reflected by the first reflective member R1, capture an image of a second portion of the object TG at least partially different from the first portion of the object TG by receiving light from the second portion of the object TG at least partially different from the first portion of the object TG, and generate wide-angle picture data representing a wide-angle picture including the first portion of the object TG and the second portion of the object TG at least partially different from the first portion of the object TG. The magnified picture may include at least one of the first reflective member R1 and the second reflective member R2.

The imaging system 300 may further generate magnified picture data representing a magnified picture of the first portion of the object TG by receiving light from the first portion of the object TG reflected by the first reflective member R1, capture an image of the second portion of the object TG at least partially different from the first portion of the object TG by receiving light from the second portion of the object TG at least partially different from the first portion of the object TG reflected by the second reflective member R2, and generate magnified picture data representing a magnified picture including the second portion of the object TG at least partially different from the first portion of the object TG. It can also be said that the imaging system 300 images the first reflective member R1 to generate magnified picture data representing a magnified picture including an object TG reflected in the first reflective member R1, and images the second reflective member R2 to generate magnified picture data representing a magnified picture including the object TG reflected in the second reflective member R2. In the example shown in FIG. 17, the first reflective member R1 is disposed so that the magnified picture includes a first surface S1 of the object TG when the object TG is at a first position P1. The second reflective member R2 is disposed so that the magnified picture includes a second surface S2 of the object TG when the object TG is at a second position P2. The first position P1 and the second position P2 may be the same position.

The general configuration of the imaging system 300 is similar to that of the imaging system 100 except that the former includes a memory 371 and a processor 373 instead of the memory 171 and the processor 173.

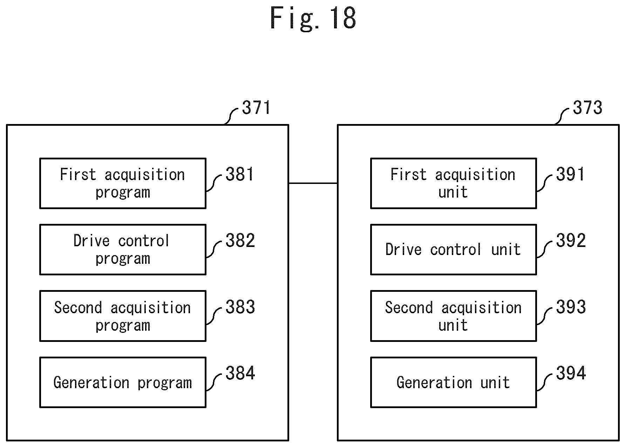

FIG. 18 is a functional block diagram of the memory 371 and the processor 373 of the imaging system 300. The memory 371 stores a first acquisition program 381, a drive control program 382, a second acquisition program 383, and a generation program 384. The processor 373 includes a first acquisition unit 391, a drive control unit 392, a second acquisition unit 393, and a generation unit 394 as functional blocks. These units are functional modules implemented by the processor 373 executing the first acquisition program 381, the drive control program 382, the second acquisition program 383, and the generation program 384. These units may be implemented in the control device as dedicated processing circuits. The configurations of the memory 371 and the processor 373 are similar to those of the memory 171 and the processor 173 according to the first embodiment, and thus will not be described further.

The first acquisition unit 391 controls the first imaging device 140 to generate picture data every predetermined imaging cycle. Picture data generated by the first imaging device 140 is wide-angle picture data representing a wide-angle picture including an object (e.g., a first portion of the object TG and a second portion of the object TG at least partially different from the first portion of the object TG). The first acquisition unit 391 acquires wide-angle picture data generated by the first imaging device 140, and stores the data in the memory 171 in association with the time when the wide-angle picture data is generated.

The first acquisition unit 391 may detect an object from the wide-angle picture data (e.g., a first portion of the object TG and a second portion of the object TG at least partially different from the first portion of the object TG), and generate position information of the object (e.g., the first portion of the object TG and the second portion of the object TG at least partially different from the first portion of the object TG) in the wide-angle picture. For example, the first acquisition unit 391 may detect an object (e.g., a first portion of the object TG and a second portion of the object TG at least partially different from the first portion of the object TG) from the wide-angle picture data by template matching. The first acquisition unit 391 may detect an object (e.g., a first portion of the object TG and a second portion of the object TG at least partially different from the first portion of the object TG) by inputting the wide-angle picture data into a classifier that is pre-trained to detect each object based on a predetermined machine learning technique. The first acquisition unit 391 determines whether the object is at a predetermined position. When the object is at a predetermined position, the first acquisition unit 391 may generate position information of the reflective member corresponding to the position of the object. For example, the first acquisition unit 391 may generate position information of the first reflective member R1 when the object is at the first position, and generate position information of the second reflective member R2 when the object is at the second position. The position information of the reflective members may be generated by template matching or a machine learning technique. If the imaging range of the wide-angle picture is fixed, the position information of each reflective member may be pre-stored in the memory 171.

The first acquisition unit 391 may generate identification information for identifying a reflective member in which the object is reflected. For example, the first acquisition unit 391 may generate first identification information when the object is at the first position and is reflected in the first reflective member, and generate second identification information when the object is at the second position and is reflected in the second reflective member. The first and second identification information may include the position information of the first and second reflective members, respectively. The first and second identification information may include information on a characteristic of the object reflected in the first and second reflective members, respectively. The first and second identification information may include sub-picture data of the object reflected in the first and second reflective members, respectively. The first and second identification information may include information on the time when the wide-angle picture data of the captured object is generated.

The drive control unit 392 controls the driver 163 of the changing device 160, based on the wide-angle picture data. For example, the drive control unit 392 may control the rotation angle of the reflective member 161, based on the position information of the first portion of the object TG and the second portion of the object TG at least partially different from the first portion of the object TG generated from the wide-angle picture data, so that images of the first portion of the object TG and the second portion of the object TG at least partially different from the first portion of the object TG generated from the wide-angle picture data are sequentially formed on the imaging surface of the second imaging element 151 via the magnification optical system 130. The relationship between the position information of the wide-angle picture and the rotation angle of the reflective member 161 may be pre-stored in the memory 171. For example, the drive control unit 392 may control the rotation angle of the reflective member 161, based on the position information of the reflective member generated from the wide-angle picture data, so that an image of the object reflected in the reflective member is formed on the imaging surface of the second imaging element 151 via the magnification optical system 130. The relationship between the position information of the object and the rotation angle of the reflective member 161 may be pre-stored in the memory 171.

The second acquisition unit 393 controls the second imaging device 150 to generate picture data every predetermined imaging cycle. The second acquisition unit 393 may sequentially generate magnified picture data representing a magnified picture of the first portion of the object TG and magnified picture data representing a magnified picture of the second portion of the object TG at least partially different from the first portion of the object TG. For example, the second acquisition unit 393 may alternately generate magnified picture data representing a magnified picture of the first portion of the object TG and magnified picture data representing a magnified picture of the second portion of the object TG at least partially different from the first portion of the object TG. The second imaging device 150 may sequentially capture a magnified image of the first portion of the object TG and a magnified image of the second portion of the object TG at least partially different from the first portion of the object TG. For example, the second imaging device 150 may alternately capture a magnified image of the first portion of the object TG and a magnified image of the second portion of the object TG at least partially different from the first portion of the object TG. In this case, the second acquisition unit 393 may simultaneously generate magnified picture data representing the magnified picture of the first portion of the object TG and magnified picture data representing the magnified picture of the second portion of the object TG at least partially different from the first portion of the object TG. Picture data generated by the second imaging device 150 may be magnified picture data representing a magnified picture including an object reflected in the first reflective member or a magnified picture including an object reflected in the second reflective member. The second acquisition unit 393 acquires the magnified picture data generated by the second imaging device 150 and stores the data in the memory 171.

The second acquisition unit 393 may associate identification information with the magnified picture data stored in the memory 171. The second acquisition unit 393 may associate the first identification information with the magnified picture data when the magnified picture includes an object reflected in the first reflective member, and associate the second identification information with the magnified picture data when the magnified picture includes an object reflected in the second reflective member. Which object is included in the magnified picture may be determined based on whether the drive control unit 392 controls the driver 163 based on the position information of the first reflective member or the position information of the second reflective member.

The generation unit 394 may generate a display signal for displaying a wide-angle picture including the first portion of the object TG and the second portion of the object TG at least partially different from the first portion of the object TG on the display device 174, and output the display signal to the display device 174. In addition to or instead of generating a display signal for displaying a wide-angle picture including the second portion of the object TG at least partially different from the first portion of the object TG on the display device 174, the generation unit 394 may generate a display signal for displaying a magnified picture of the first portion of the object TG and a magnified picture of the second portion of the object TG at least partially different from the first portion of the object TG in different display areas of the display device 174, and output the display signal to the display device 174. In this case, the generation unit 394 may generate display signals for sequentially displaying a magnified picture of the first portion of the object TG and a magnified picture of the second portion of the object TG at least partially different from the first portion of the object TG in different display areas of the display device 174, and output the display signals to the display device 174. For example, the generation unit 394 may generate display signals for alternately displaying a magnified picture of the first portion of the object TG and a magnified picture of the second portion of the object TG at least partially different from the first portion of the object TG in different display areas of the display device 174, and output the display signals to the display device 174. The generation unit 394 may generate a display signal for simultaneously displaying a magnified picture of the first portion of the object TG and a magnified picture of the second portion of the object TG at least partially different from the first portion of the object TG in different display areas of the display device 174, and output the display signal to the display device 174. The generation unit 394 may generate a display signal for displaying a magnified picture of the object TG in a display area of the display device 174 different from the display area that displays a wide-angle picture including the first portion of the object TG and the second portion of the object TG at least partially different from the first portion of the object TG. The generation unit 194 may generate a display signal for displaying a picture of the object reflected in the reflective member on the display device 174 every predetermined imaging cycle. For example, the generation unit 194 may acquire the wide-angle picture data with the latest generation time among pieces of wide-angle picture data stored in the memory 171. The generation unit 194 may acquire the magnified picture data with the latest generation time among pieces of magnified picture data stored in the memory 171 and associated with the first or second identification information. Based on the acquired data, the generation unit 194 may generate a display signal for displaying the wide-angle picture and the magnified picture including the object reflected in the first or second reflective member in different display areas of the display device 174, respectively. The generation unit 194 may output the display signal to the display device 174 via the interface 172.

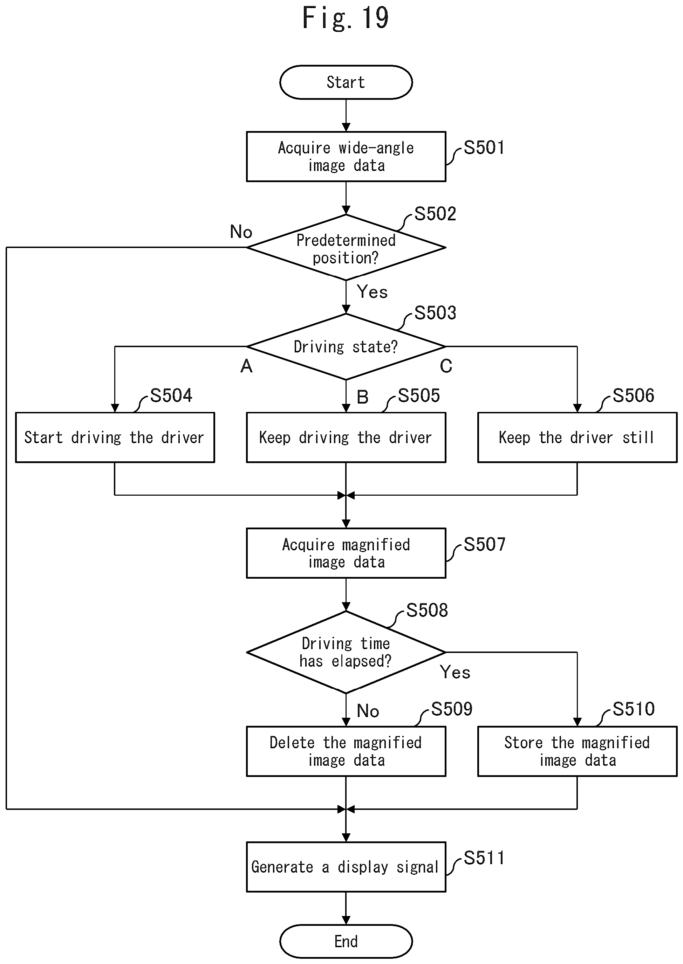

FIG. 19 is a flowchart showing an example of the flow of a display method executed by the imaging system 300.

First, the first acquisition unit 391 acquires wide-angle picture data representing a wide-angle picture including an object and the first and second reflective members from the first imaging device 140 (step S501). When the object is at a predetermined position, the first acquisition unit 391 may generate position information of the reflective member corresponding to the position of the object. The first acquisition unit 391 may generate identification information for identifying a reflective member in which the object is reflected. In step S501, the first acquisition unit 391 may acquire wide-angle picture data representing a wide-angle picture including a first portion of the object TG and a second portion of the object TG at least partially different from the first portion of the object TG from the first imaging device 140. In this case, the first acquisition unit 391 may generate, for example, position information of the first portion of the object TG in the wide-angle picture and position information of the second portion of the object TG at least partially different from the first portion of the object TG in the wide-angle picture.

Next, when the object is at a predetermined position (Yes in step S502), the drive control unit 392 determines the driving state of the driver 163 (step S503).

When the driver 163 has not yet been driven so that an image of the object reflected in the reflective member is formed on the imaging surface 152 of the second imaging element 151 (A in step S503), the drive control unit 392 starts driving the driver 163 (step S504).

When the time required to drive has not elapsed since the start of driving the driver 163 (B in step S503), the drive control unit 392 keeps driving the driver 163 so that an image of the object reflected in the reflective member is formed on the imaging surface of the second imaging element 151 (step S505).

When the time required to drive has elapsed since the start of driving the driver 163 (C in step S503), the drive control unit 392 keeps the driver 163 still until magnified picture data is stored (step S506). Magnified picture data may be acquired (step S507) without determining the driving state of the driver (step S503 to step S506). In this case, the drive control unit 392 may drive the driver 163, based on the positional information of the first portion of the object TG, so that a magnified image of the first portion of the object TG is formed on the imaging surface 152 of the second imaging element 151 via the magnification optical system 130. The drive control unit 392 may further drive the driver 163, based on the positional information of the second portion of the object TG at least partially different from the first portion of the object TG, so that a magnified image of the second portion of the object TG is formed on the imaging surface 152 of the second imaging element 151 via the magnification optical system 130. For example, the drive control unit 392 may drive the driver 163 so that a magnified image of the first portion of the object TG and a magnified image of the second portion of the object TG at least partially different from the first portion of the object TG are sequentially formed on the imaging surface 152 of the second imaging element 151. For example, the drive control unit 392 may drive the driver 163 so that a magnified image of the first portion of the object TG and a magnified image of the second portion of the object TG at least partially different from the first portion of the object TG are alternately formed on the imaging surface 152 of the second imaging element 151.

Next, the second acquisition unit 393 acquires magnified picture data from the second imaging device 150 (step S507).

Next, the second acquisition unit 393 determines whether the magnified picture data is generated after the time required to drive has elapsed since the time when driving the driver 163 is started (step S508).

If the magnified picture data is generated before the elapse of the time required to drive (No in step S508), the second acquisition unit 193 deletes the acquired magnified picture data (step S509). The second acquisition unit 193 may store the acquired magnified picture data in the memory 171 in association with identification information indicating that no object is included, without deleting the data.

If the magnified picture data is generated after the elapse of the time required to drive (Yes in step S509), the second acquisition unit 193 stores the magnified picture data in the memory 171 (step S510). Further, the second acquisition unit 193 associates first or second identification information with the magnified picture data stored in the memory 171.

When the object is not at a predetermined position (No in step S502) or next to step S510, the generation unit 194 generates a display signal (step S511). The generation unit 194 generates a display signal for displaying a wide-angle picture and a magnified picture including the object in different display areas of the display device 174, based on the wide-angle picture data and the magnified picture data stored in the memory 171. The generation unit 194 outputs the display signal to the display device 174 via the interface 172. This completes the display method.

In this way, the generation unit 394 of the imaging system 300 generates a display signal for displaying magnified pictures including images of an object reflected in the reflective members on the display device 174 according to the position of the object. This allows for grasping images of an object viewed from different directions.

In the present embodiment, a third reflective member R3 may be provided in addition to the first reflective member R1 and the second reflective member R2. In this case, the wide-angle picture may include three different portions of an object TG. The generation unit 194 may generate display signals for sequentially displaying magnified pictures respectively including the three different portions of the object TG on the display device 174, and output the display signals. For example, the generation unit 194 may generate display signals for alternately displaying magnified pictures respectively including the three different portions of the object TG on the display device 174, and output the display signals. The generation unit 194 may generate a display signal for simultaneously displaying magnified pictures respectively including the three different portions of the object TG on the display device 174, and output the display signal. The reflective members in the present embodiment are not limited to the first reflective member R1, the second reflective member R2, and the third reflective member R3; four or more reflective members may be provided. The wide-angle picture may include the first, second, and third reflective members. In this case, the generation unit 194 generates a display signal for displaying a magnified picture including an object reflected in the first reflective member, a magnified picture including the object reflected in the second reflective member, and a magnified picture including the object reflected in the third reflective member on the display device 174 according to the position of the object. Similarly, magnified pictures of an object reflected in four or more reflective members may be displayed on the display device 174 according to the position of the object. In the present embodiment, an illumination device (not shown) may be provided. In this case, at least one of the first imaging device 140 and the second imaging device 150 may image the object TG illuminated by the illumination device (not shown).

### [Fourth embodiment]

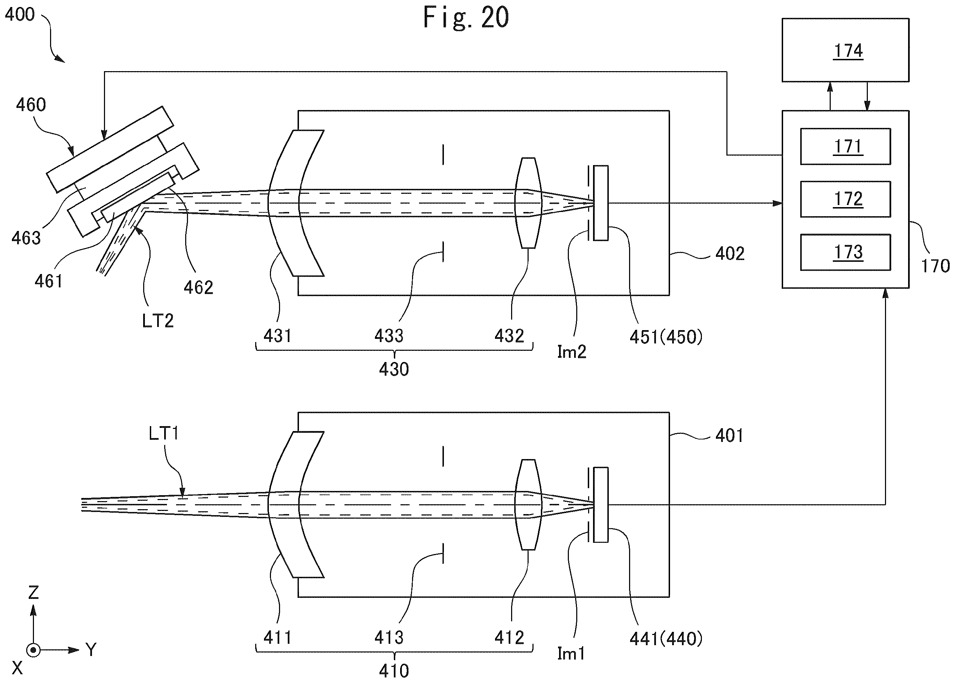

FIG. 20 illustrates the general configuration of an imaging system 400 of a fourth embodiment. The imaging system 400 includes a first optical system 410, a second optical system 430, a first imaging device 440, a second imaging device 450, a changing device 460, and a control device 170. The first optical system 410 and the first imaging device 440 are housed and held in a first housing 401. The second optical system 430 and the second imaging element 450 are housed and held in a second housing 402. In other words, the first optical system 410 and the second optical system 430 are provided separately. The imaging system 400 is connected to a display device 174.

The first optical system 410 includes a front lens 411, a rear lens 412, and an aperture stop 413. The first optical system 410 may be telecentric on the side of the first imaging device 440. The front lens 411 is disposed farther from the first imaging device 440 than the aperture stop 413. The rear lens 412 is disposed closer to the first imaging device 440 than the aperture stop 413. The front lens 411 and the rear lens 412 may each be composed of a single lens or multiple lenses. The front lens 411 and the rear lens 412 may each include an optical member other than a lens in addition to one or more lenses. The front lens 411 may include a focusing lens movable along the optical axis during focusing.

The second optical system 430 includes a front lens 431, a rear lens 432, and an aperture stop 433. The second optical system 430 may be telecentric on the side of the second imaging device 450. The front lens 431 is disposed farther from the second imaging device 450 than the aperture stop 433. The rear lens 432 is disposed closer to the second imaging device 450 than the aperture stop 433. The front lens 431 and the rear lens 432 may each be composed of a single lens or multiple lenses. The front lens 431 and the rear lens 432 may each include an optical member other than a lens in addition to one or more lenses. The front lens 431 may include a focusing lens movable along the optical axis during focusing.

Light LT1 that has passed through the first optical system 410 forms a first image Im1. Light LT2 that has passed through the second optical system 430 forms a second image Im2.

The first imaging device 440 includes a first imaging element 441 that captures the first image Im1. The first imaging element 441 is configured similarly to the first imaging element 141.

The second imaging device 450 includes a second imaging element 451 that captures the second image Im2. The first imaging element 451 is configured similarly to the first imaging element 151.

The changing device 460 includes a reflective member 461 having a reflective surface 462 as well as a driver 463. The reflective surface 462 of the reflective member 461 may be disposed in the vicinity of the optical axis of the second magnification optical system 431. The reflective surface 462 of the reflective member 461 reflects at least part of the light LT2 from an object toward the second optical system 430. The driver 463 is configured similarly to the driver 163.

The display method executed by the imaging system 400 is similar to the display method executed by the imaging system 100.

Although the optical axes of the first optical system 410 and the second optical system 430 are parallel in the example shown in FIG. 20, the present invention is not limited to such an example. The directions of the optical axes of the first optical system 410 and the second optical system 430 may differ.

It should be understood that those skilled in the art can make various changes, substitutions, and modifications to the above-described embodiments within the scope of the present invention. For example, the above-described processes may be executed in different order within the scope of the present invention. The above-described various embodiments and modified examples may be combined as appropriate.

## Claims

1. An imaging system comprising:
a first optical system;
a first imaging element that generates first picture data representing a first picture by capturing an image formed by the first optical system;
a second optical system;
a second imaging element that generates second picture data representing a second picture by capturing an image formed by the second optical system;
a changing device that changes at least one of the direction and position of at least one of at least part of the second optical system and the second imaging element; and
a control device, wherein
the first picture includes a first object and a second object, and
to a display device the control device outputs a display signal for displaying, in different display areas of the display device,
the second picture of the first object generated by controlling the changing device to capture an image of the first object with the second imaging element, based on the first picture data, so that an image of the first object is formed on an imaging surface of the second imaging element via the second optical system, and
the second picture of the second object generated by controlling the changing device to capture an image of the second object with the second imaging element, based on the first picture data, so that an image of the second object is formed on the imaging surface via the second optical system.

2. The imaging system according to claim 1, wherein
the second optical system is a magnification optical system,
the second picture data of the first object is data generated by capturing, with the second imaging element, a magnified image of the first object formed via the magnification optical system, and
the second picture data of the second object is data generated by capturing, with the second imaging element, a magnified image of the second object formed via the magnification optical system.

3. The imaging system according to claim 1 or 2, wherein
the control device controls the changing device so that images of the first object and the second object are alternately formed on the imaging surface of the second imaging element, and
the second imaging element alternately generates the second picture data of the first object and the second picture data of the second object.

4. The imaging system according to claim 2, wherein
the control device
alternately generates the display signal for displaying the second picture of the first object based on the second picture data of the first object and the display signal for displaying the second picture of the second object based on the second picture data of the second object, and
alternately outputs the display signal for displaying the second picture of the first object and the display signal for displaying the second picture of the second object to the display device.

5. The imaging system according to claim 3 or 4, wherein
the display signal causes the display device to alternately display the second picture of the first object and the second picture of the first object in a cycle shorter than a cycle corresponding to 30 fps.

6. The imaging system according to any one of claims 3 to 5, wherein
a cycle in which the display signal for displaying the second picture of the first object and the display signal for displaying the second picture of the first object are alternately outputted is shorter than a screen update cycle of the display device.

7. The imaging system according to any one of claims 3 to 6, wherein
a cycle in which the display signal for displaying the second picture of the first object and the display signal for displaying the second picture of the first object are alternately outputted is shorter than a cycle corresponding to 30 fps.

8. The imaging system according to any one of claims 3 to 7, wherein
the display signal for displaying the second picture of the first object and the display signal for displaying the second picture of the first object are alternately generated every predetermined time.

9. The imaging system according to claim 8, wherein
the predetermined time is set according to user operation.

10. The imaging system according to claim 3 or 4, wherein
the control device alternately generates the display signal for displaying the second picture of the first object and the display signal for displaying the second picture of the first object, based on information on operation of the changing device.

11. The imaging system according to any one of claims 1 to 10, wherein
the control device
controls the changing device, based on position information of the first object in the first picture, and
controls the changing device, based on position information of the second object in the first picture.

12. The imaging system according to any one of claims 1 to 11, wherein
the display areas include a first display area for displaying the second picture of the first object and a second display area for displaying the second picture of the second object.

13. The imaging system according to any one of claims 1 to 12, wherein
the display areas include a third display area for displaying the first picture.

14. The imaging system according to any one of claims 1 to 13, wherein
the control device generates first identification information for identifying the first object and second identification information for identifying the second object, based on the first picture data.

15. The imaging system according to claim 14, wherein
the first identification information includes information on a characteristic of the first object

16. The imaging system according to claim 15, wherein
the characteristic of the first object includes at least one of the shape, color, size, and type of the first object.

17. The imaging system according to any one of claims 14 to 16, wherein
the first identification information includes sub-picture data including the first object and generated from the first picture data.

18. The imaging system according to any one of claims 14 to 17, wherein
the first identification information includes information on the position of the first object.

19. The imaging system according to any one of claims 14 to 18, wherein
the first identification information includes information on the time when the first picture data of the captured first object is generated.

20. The imaging system according to any one of claims 14 to 19, wherein
the first identification information includes information on the amount of change in position of the first object.

21. The imaging system according to any one of claims 14 to 20, wherein
the control device
generates the first identification information, based on the first picture data,
controls the changing device, based on information on the position of the first object generated based on the first picture data, and
associates the first identification information with the second picture data of the first object generated by capturing with the second imaging element.

22. The imaging system according to any one of claims 14 to 21, wherein
the second identification information includes information on a characteristic of the second object.

23. The imaging system according to claim 22, wherein
the characteristic of the second object includes at least one of the shape, color, size, and type of the second object.

24. The imaging system according to any one of claims 14 to 23, wherein
the second identification information includes sub-picture data including the second object and generated from the first picture data.

25. The imaging system according to any one of claims 14 to 24, wherein
the second identification information includes information on the position of the second object.

26. The imaging system according to any one of claims 14 to 25, wherein
the second identification information includes information on the time when the first picture data of the captured second object is generated.

27. The imaging system according to any one of claims 14 to 26, wherein
the second identification information includes information on the amount of change in position of the second object.

28. The imaging system according to any one of claims 14 to 27, wherein
the control device
generates the second identification information, based on the first picture data,
controls the changing device, based on position information of the second object generated based on the first picture data, and
associates the second identification information with the second picture data of the second object generated by capturing with the second imaging element.

29. The imaging system according to claim 28, wherein
the display areas include a first display area for displaying the second picture of the first object and a second display area for displaying the second picture of the second object,
the first display area is an area for displaying a second picture associated with the first identification information, and
the second display area is an area for displaying a second picture associated with the second identification information.

30. The imaging system according to claim 29, wherein
the display signal includes a signal for displaying the second picture data of the first object associated with the first identification information in the first display area and a signal for displaying the second picture data associated with the second identification information in the second display area.

31. The imaging system according to any one of claims 15 to 30, wherein
the first picture includes at least one of the first identification information and the second identification information.

32. The imaging system according to any one of claims 15 to 31, wherein
the second picture includes at least one of the first identification information and the second identification information.

33. The imaging system according to any one of claims 1 to 14, wherein
the control device generates information including first identification information for identifying the first object, based on the first picture data.

34. The imaging system according to claim 33, wherein
the control device generates information including second identification information for identifying the second object, based on the first picture data.

35. The imaging system according to claim 33 or 34, wherein
the control device generates third identification information for identifying the first object or the second object, based on the second picture data.

36. The imaging system according to claim 35, wherein
the first identification information is information on a characteristic of the first object,
the second identification information is information on a characteristic of the second object, and
the third identification information is information on a characteristic of the first object or the second object.

37. The imaging system according to claim 36, wherein
each of the characteristics of the first, second, and third objects includes at least one of the shape, color, size, and type of the object.

38. The imaging system according to any one of claims 35 to 37, wherein
the first identification information includes sub-picture data including the first object and generated from the first picture data, and/or
the second identification information includes sub-picture data including the second object and generated from the first picture data, and/or
the third identification information includes sub-picture data of the first object or the second object generated from the second picture data.

39. The imaging system according to any one of claims 35 to 38, wherein
the first identification information includes information on the position of the first object, and/or
the second identification information includes information on the position of the second object, and/or
the third identification information includes information on the position of the first object or the second object.

40. The imaging system according to any one of claims 35 to 39, wherein
the first identification information includes information on the time when the first picture data of the captured first object is generated, and/or
the second identification information includes information on the time when the first picture data of the captured second object is generated, and/or
the third identification information includes information on the time when the second picture data of the captured first or second object is generated.

41. The imaging system according to claims 35 to 40, wherein
the first identification information includes information on the amount of change in position of the first object, and/or
the second identification information includes information on the amount of change in position of the second object, and/or
the third identification information includes information on the amount of change in position of the first object or the second object.

42. The imaging system according to any one of claims 35 to 41, wherein
the control device
generates the first identification information, based on the first picture data,
controls the changing device, based on position information of the first object generated based on the first picture data,
generates the third identification information, based on the second picture data, and
associates the third identification information with the second picture of the first object or the second object generated by capturing with the second imaging element.

43. The imaging system according to any one of claims 35 to 42, wherein
the control device
generates the second identification information, based on the first picture data,
controls the changing device, based on position information of the second object generated based on the first picture data,
generates the third identification information, based on the second picture data, and
associates the third identification information with the second picture of the first object or the second object generated by capturing with the second imaging element.

44. The imaging system according to any one of claims 35 to 43, wherein
the display areas include a first display area for displaying the second picture of the first object and a second display area for displaying the second picture of the second object,
the first display area is an area for displaying the second picture associated with the first identification information or the second picture of the first object associated with the third identification information, and
the second display area is an area for displaying the second picture associated with the second identification information or the second picture of the second object associated with the third identification information.

45. The imaging system according to claim 44, wherein
the control device
compares the first identification information with the third identification information, and generates a signal for displaying the second picture data in the first display area when it is determined that the first identification information is the same as the third identification information, and
compares the second identification information with the third identification information, and generates a display signal for displaying the second picture data in the second display area when it is determined that the first identification information is the same as the third identification information.

46. The imaging system according to claim 44 or 45, wherein
the control device
generates a display signal for displaying a blank picture in the first display area when it is determined that the first object is not displayed in the second picture data, and
generates a display signal for displaying a blank picture in the second display area when it is determined that the second object is not displayed in the second picture data.

47. The imaging system according to claim 44 or 45, wherein
the control device
does not change display in the first display area when it is determined that the first object is not displayed in the second picture data, and
does not change display in the second display area when it is determined that the second object is not displayed in the second picture data.

48. The imaging system according to any one of claims 35 to 47, wherein
the first picture includes the first identification information or the second identification information.

49. The imaging system according to any one of claims 35 to 48, wherein
the second picture includes the third identification information.

50. The imaging system according to any one of claims 1 to 49, wherein
the control device
sequentially acquires information on movement of the first object acquired from the first picture data,
sequentially controls the changing device according to information on movement of the first object, and
generates the display signal for displaying, in the first display area, the second picture data in which an image of the first object is captured, the second picture data being generated by the second imaging element according to control of the changing device.

51. The imaging system according to any one of claims 1 to 50, wherein
the control device
acquires first information on movement of the first object acquired from the first picture data generated at first time,
controls the changing device according to first information on movement of the first object,
acquires second information on movement of the first object acquired from the first picture data generated at second time different from the first time, and
changes the control of the changing device, based on the second information.

52. The imaging system according to any one of claims 1 to 51, wherein
the control device controls the changing device so that an image of the first object is displayed near the center of the second picture.

53. The imaging system according to any one of claims 1 to 52, wherein
the control device
sequentially acquires information on movement of the second object acquired from the first picture data,
sequentially controls the changing device according to information on movement of the second object, and
generates the display signal for displaying, in the second display area, the second picture data in which an image of the second object is captured, the second picture data being generated by the second imaging element according to control of the changing device.

54. The imaging system according to any one of claims 1 to 53, wherein
the control device
acquires first information on movement of the second object acquired from the first picture data generated at first time,
controls the changing device according to first information on movement of the second object,
acquires second information on movement of the second object acquired from the first picture data generated at second time different from the first time, and
changes the control of the changing device, based on the second information.

55. The imaging system according to any one of claims 1 to 54, wherein
the control device controls the changing device so that an image of the second object is displayed near the center of the second picture.

56. The imaging system according to any one of claims 1 to 55, wherein
the control device generates a display signal for displaying the first object and the second object represented in the first picture in different manners and displaying each of the second pictures of the first object and the second object in a manner corresponding to the object represented in the second picture.

57. The imaging system according to any one of claims 1 to 56, wherein
the control device generates a display signal for causing the display area of the second picture of the first object or the second picture of the second object selected by user operation to be displayed larger.

58. The imaging system according to any one of claims 1 to 57, wherein
the second imaging element continuously captures images of the first object or the second object selected by user operation to generate the second picture of the object.

59. The imaging system according to any one of claims 1 to 58, wherein
the control device adjusts a display period or an update frequency of display of the second picture, based on the position, speed, or appearance characteristics of the first object generated based on the first picture data.

60. The imaging system according to any one of claims 1 to 59, further comprising
storage that generates and stores at least one of the first picture data and the second picture data for a predetermined period.

61. The imaging system according to claim 60, wherein
the control device generates the display signal for displaying first pictures generated based on the first picture data stored in the storage on the display device with the first pictures arranged in chronological order.

62. The imaging system according to claim 60 or 61, wherein
the control device generates the display signal for displaying second pictures generated based on the second picture data stored in the storage on the display device with the second pictures arranged in chronological order.

63. The imaging system according to any one of claims 1 to 62, wherein
the control device
detects an abnormality of the first object, based on the first picture data or the second picture data,
assigns identification information indicating an abnormality to the second picture representing the first object of which an abnormality is detected, and
generates a display signal for displaying a second picture assigned the identification information indicating an abnormality.

64. The imaging system according to any one of claims 1 to 63, wherein
the changing device includes a reflective member that reflects at least part of light passing through the second optical system to guide the light to the imaging surface; and
a driver that drives the reflective member to change the orientation of a reflective surface of the reflective member with respect to the optical axis of the second optical system.

65. The imaging system according to claim 64, wherein
the reflective member is provided in at least part of an optical path of the second optical system between the second optical system and the second imaging element.

66. The imaging system according to any one of claims 1 to 63, wherein
the changing device moves the imaging surface of the second imaging element in a direction intersecting the optical axis of the second optical system.

67. The imaging system according to any one of claims 1 to 63, wherein
the changing device includes a driver that moves the second imaging element in a direction parallel to the imaging surface of the second imaging element.

68. The imaging system according to any one of claims 1 to 67, further comprising
a light-splitting member that splits light that has passed through the first optical system to guide one portion of light to the first imaging element and the other portion of light to the second optical system, wherein
the second optical system re-forms at least part of an image formed from the other portion of light split by the light-splitting member on the imaging surface of the second imaging element.

69. The imaging system according to any one of claims 1 to 67, wherein
the direction of the optical axis of the first optical system differs from the direction of the optical axis of the second optical system.

70. The imaging system according to any one of claims 1 to 69, wherein
the control device outputs the display signal for further displaying, in a display area of a display device different from a display area for the second picture of the first object and a display area for the second image of the second object, the second picture of a third object generated by controlling the changing device to capture an image of the third object with the second imaging element, based on the first picture data, so that an image of the third object is formed on the imaging surface of the second imaging element.

71. An imaging system comprising:
a first optical system;
a first imaging element that generates first picture data representing a first picture by capturing an image formed by the first optical system;
a second optical system;
a second imaging element that generates second picture data representing a second picture by capturing an image formed by the second optical system;
a changing device that changes at least one of the direction and position of at least one of at least part of the second optical system and the second imaging element; and
a control device, wherein
the first picture includes an object, and
to a display device the control device outputs a display signal for displaying, in different display areas of the display device,
the second picture generated by controlling the changing device to form an image of a first portion of the object picture on an imaging surface of the second imaging element via the second optical system and a first reflective member, based on the first picture data, and capturing the image of the first portion of the object with the second imaging element, and
the second picture generated by controlling the changing device to form an image of a second portion of the object at least partially different from the first portion of the object picture on the imaging surface via the second optical system and a second reflective member disposed at a position different from the first reflective member, based on the first picture data, and capturing the image of the second portion of the object with the second imaging element.

72. The imaging system according to claim 71, wherein
the first picture includes the first portion and the second portion of the object as the object.

73. The imaging system according to claim 71 or 72, wherein
the first reflective member reflects light from the first portion of the object,
the second reflective member reflects light from the second portion of the object, and
the first imaging device generates the first picture data by capturing an image formed via the first optical system by light from the first portion of the object reflected by the first reflective member and an image formed via the first optical system by light from the second portion of the object reflected by the second reflective member.

74. The imaging system according to any one of claims 71 to 73, wherein
the control device inspects the object, based on at least one of the second picture generated by capturing the image of the first portion with the second imaging element and the second picture generated by capturing the image of the second portion with the second imaging element.

75. The imaging system according to any one of claims 71 to 74, further comprising
the first reflective member and the second reflective member.

76. An imaging system comprising:
a first optical system;
a first imaging element that generates first picture data by capturing an image formed by the first optical system;
a second optical system;
a second imaging element that generates second picture data by capturing an image formed by the second optical system;
a changing device that changes the direction or position of at least part of the second optical system and the second imaging element; and
a control device, wherein
the first picture includes a first object and a second object, and
to a display device the control device outputs display signals for alternately displaying, in a display area of the display device,
the second picture of the first object generated by controlling the changing device to capture an image of the first object with the second imaging element, based on the first picture data, so that an image of the first object is formed on the imaging surface via the second optical system, and
the second picture of the second object generated by controlling the changing device to capture an image of the second object with the second imaging element, based on the first picture data, so that an image of the second object is formed on the imaging surface of the second imaging element.

77. A display method executed by an imaging system including a first optical system, a second optical system, a first imaging element, a second imaging element, and a changing device, the display method comprising:
generating first picture data including a first object and a second object by capturing an image formed by the first optical system with the first imaging element;
generating second picture data by capturing an image formed by the second optical system with the second imaging element; and
outputting, to a display device, a display signal for displaying, in different display areas of the display device,
the second picture of the first object generated by controlling the changing device to capture an image of the first object with the second imaging element, based on the first picture data, so that an image of the first object is formed on the imaging surface via the second optical system, and
the second picture of the second object generated by controlling the changing device to capture an image of the second object with the second imaging element, based on the first picture data, so that an image of the second object is formed on the imaging surface of the second imaging element.
